(19) **Europäisches Patentamt**
**European Patent Office**
**Office européen des brevets**

(11) **EP 3 711 207 B1**

(12) **EUROPEAN PATENT SPECIFICATION**

(45) Date of publication and mention
of the grant of the patent:
**30.07.2025 Bulletin 2025/31**

(21) Application number: **18812280.8**

(22) Date of filing: **13.11.2018**

(51) International Patent Classification (IPC):
*H04L 1/00* (2006.01)        *H04L 5/00* (2006.01)
*H04B 7/06* (2006.01)        *H04B 7/0456* (2017.01)

(52) Cooperative Patent Classification (CPC):
**H04B 7/0456; H04B 7/0645; H04L 1/0026;**
**H04L 5/005; H04L 5/0053; H04L 5/0094;**
H04B 7/0697; H04L 5/0023

(86) International application number:
**PCT/IB2018/058928**

(87) International publication number:
**WO 2019/092684 (16.05.2019 Gazette 2019/20)**

(54) **METHODS AND APPARATUSES FOR PORT INDEX SIGNALING FOR NON-PRECODER MATRIX INDICATOR (PMI) CHANNEL STATE INFORMATION (CSI) FEEDBACK**

VERFAHREN UND VORRICHTUNGEN ZUR PORT-INDEXSIGNALISIERUNG FÜR RÜCKKOPPLUNG VON KANALZUSTANDSINFORMATIONEN (CSI ) EINES NON-PRECODERMATRIXINDIKATORS (PMI)

PROCÉDÉS ET APPAREILS DE SIGNALISATION D'INDICE DE PORT POUR UN RETOUR D'INFORMATIONS D'ÉTAT DE CANAL (CSI) D'INDICATEUR DE MATRICE NON DE PRÉCODAGE (PMI)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2017   US 201762585323 P**

(43) Date of publication of application:
**23.09.2020 Bulletin 2020/39**

(73) Proprietor: **Telefonaktiebolaget LM Ericsson (publ)**
**164 83 Stockholm (SE)**

(72) Inventors:
• **GAO, Shiwei**
  **Nepean, Ontario K2J 0H5 (CA)**
• **FAXÉR, Sebastian**
  **177 53 Järfälla (SE)**
• **HARRISON, Robert Mark**
  **Grapevine, Texas 76051 (US)**
• **MURUGANATHAN, Siva**
  **Stittsville, Ontario K2S 0R3 (CA)**

(74) Representative: **Ericsson**
**Patent Development**
**Torshamnsgatan 21-23**
**164 80 Stockholm (SE)**

(56) References cited:
**US-A1- 2011 032 839**

• **OPPO: "Discussion on CSI Measurement", vol. RAN WG1, no. Prague, CZ; 20171009 - 20171013, 8 October 2017 (2017-10-08), XP051341235, Retrieved from the Internet <URL:http://www.3gpp.org/ftp/Meetings_3GPP_SYNC/RAN1/Docs/> [retrieved on 20171008]**
• **QUALCOMM EUROPE: "Transparent vs. non-transparent MU-MIMO operation", 3GPP DRAFT; R1-094873 SU-MU TRANSPARENCY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389251**

• ERICSSON: "On CSI measurement", vol. RAN WG1, no. Prague, Czech Republic; 20171009 - 20171013, 8 October 2017 (2017-10-08), XP051341613, Retrieved from the Internet <URL:http://www.3gpp.org/ftp/ Meetings_3GPP_SYNC/RAN1/Docs/> [retrieved on 20171008]

**Description**

TECHNICAL FIELD

Wireless communication and in particular, port index signaling for non-precoder matrix indicator (PMI) channel state information (CSI) feedback.

BACKGROUND

The next generation mobile wireless communication system (5G) or new radio (NR), will support a diverse set of use cases and a diverse set of deployment scenarios. The latter includes deployment at both low frequencies (100s of MHz), similar to longer term evolution (LTE) today, and very high frequencies (mm waves in the tens of GHz).

Similar to LTE, NR uses plain Orthogonal Frequency Division Multiplexing (OFDM) with cyclic prefix, also known as CP-OFDM, in the downlink (i.e., from a network node, or gNB, to a wireless device or WD). In the uplink (i.e., from WD to gNB), both CP-OFDM and discrete Fourier transform (DFT)-spread OFDM (DFT-S-OFDM) will be supported.

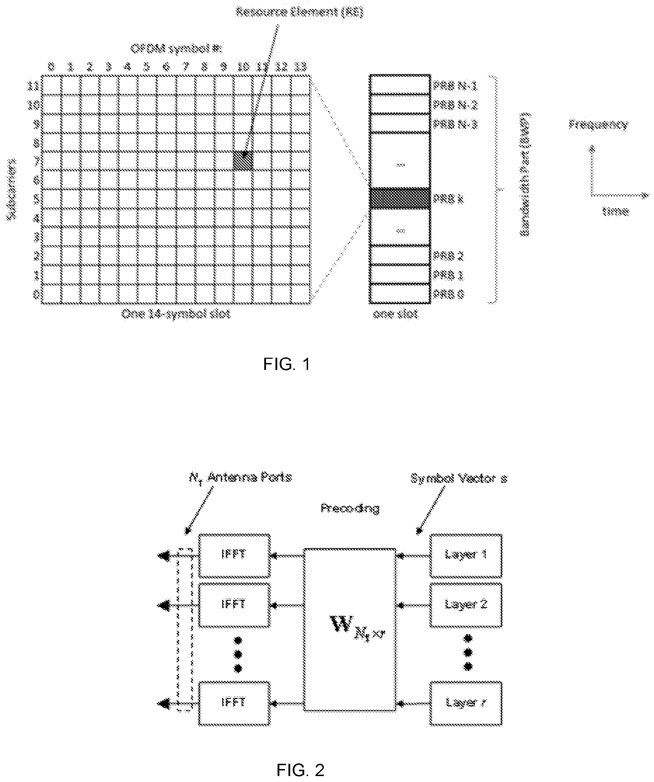

The basic NR physical resource can thus be seen as a time-frequency grid as illustrated in FIG. 1, where each resource element (RE) corresponds to one OFDM subcarrier during one OFDM symbol interval. A component carrier may contain one or multiple bandwidth parts (BWPs), each BWP consists of a group of contiguous physical resource blocks (PRBs) in the frequency domain. PRBs are numbered starting with 0 from one end of a BWP. Each PRB consists of 12 subcarriers. FIG. 1 shows an example of a BWP.

Different subcarrier spacing values are supported in NR. The supported subcarrier spacing values (also referred to as different numerologies) in NR are given by $\Delta f=(15\times2^\wedge\alpha)$ kHz where $\alpha$ is a non-negative integer and where a subcarrier spacing of 15kHz is referred to as the reference numerology.

In the time domain, downlink and uplink transmissions in NR will be organized into equally-sized subframes. Each subframe has a fixed duration of 1ms. A subframe is further divided into one or multiple slots of equal duration. A 14-symbol slot is shown in FIG. 1. Data scheduling in NR can be on a slot basis. The slot duration can be different for different subcarrier spacings.

Downlink transmissions are dynamically scheduled, i.e., in each slot, the gNB transmits downlink control information (DCI) concerning which WD data is to be transmitted to and which PRBs in the current downlink slot the data is transmitted on. This control signaling is typically transmitted in the first one or two OFDM symbols in each slot in NR. The control information is carried on the Physical Downlink Control Channel (PDCCH) and data is carried on the Physical Downlink Shared Channel (PDSCH). A WD first detects and decodes the PDCCH and if a PDCCH is decoded successfully, the WD then decodes the corresponding PDSCH based on the decoded control information in the PDCCH.

Uplink data transmission are also dynamically scheduled using the PDCCH. Similar to downlink, a WD first decodes uplink grants in the PDCCH and then transmits data over the Physical Uplink Shared Channel (PUSCH) based on the decoded control information in the uplink grant such as modulation order, coding rate, uplink resource allocation, and etc.

Spatial Multiplexing

Multi-antenna techniques can significantly increase the data rates and reliability of a wireless communication system. The performance is in particular improved if both the transmitter and the receiver are equipped with multiple antennas, which results in a multiple-input multiple-output (MIMO) communication channel. Such systems and/or related techniques are commonly referred to as MIMO.

A core component in LTE and NR is the support of MIMO antenna deployments and MIMO related techniques. Spatial multiplexing is one of the MIMO techniques used to achieve high data rates in favorable channel conditions. An illustration of the spatial multiplexing operation is provided in FIG. 2.

As seen, the information carrying symbol vector $\boldsymbol{s} = [s_1, s_2, ..., s_r]^T$ is multiplied by an $N_T$ x $r$ precoder matrix $\boldsymbol{W}$, which serves to distribute the transmit energy in a subspace of the $N_T$ (corresponding to $N_T$ antenna ports) dimensional vector space. The precoder matrix is typically selected from a codebook of possible precoder matrices, and typically indicated by means of a precoder matrix indicator (PMI), which specifies a unique precoder matrix in the codebook for a given number of symbol streams. The $r$ symbols in $\boldsymbol{s}$ each correspond to a layer and $r$ is referred to as the transmission rank. In this way, spatial multiplexing is achieved since multiple symbols can be transmitted simultaneously over the same time/frequency resource element (RE). The number of symbols $r$ is typically adapted to suit the current channel properties.

The received signal at a WD with $N_R$ receive antennas at a certain RE $n$ is given by

$$y_n = H_n W s + e_n$$

where $\boldsymbol{y}_n$ is a $N_R \times 1$ received signal vector, $\boldsymbol{H}_n$ a $N_R \times N_T$ channel matrix at the RE, $\boldsymbol{e}_n$ is a $N_R \times 1$ noise and interference vector received at the RE by the WD. The precoder W can be a wideband precoder, which is constant over frequency, or frequency selective, i.e. different over frequency.

The precoder matrix is often chosen to match the characteristics of the $N_R \times N_T$ MIMO channel matrix $\boldsymbol{H}_n$, resulting in so-called channel dependent precoding. This is also commonly referred to as closed-loop precoding and essentially strives for focusing the transmit energy into a subspace which is strong in the sense of conveying much of the transmitted energy to the WD. In addition, the precoder matrix may also be selected to strive for orthogonalizing the channel, meaning that after proper linear equalization at the WD, the inter-layer interference is reduced.

The transmission rank, and thus the number of spatially multiplexed layers, is reflected in the number of columns of the precoder. The transmission rank is also dependent on the Signal to noise plus interference ratio (SINR) observed at the WD. Typically a higher SINR is required for transmissions with higher ranks. For efficient performance, it is important that a transmission rank that matches the channel properties as well as the interference is selected.

Channel State Information Reference Signals (CSI-RS)

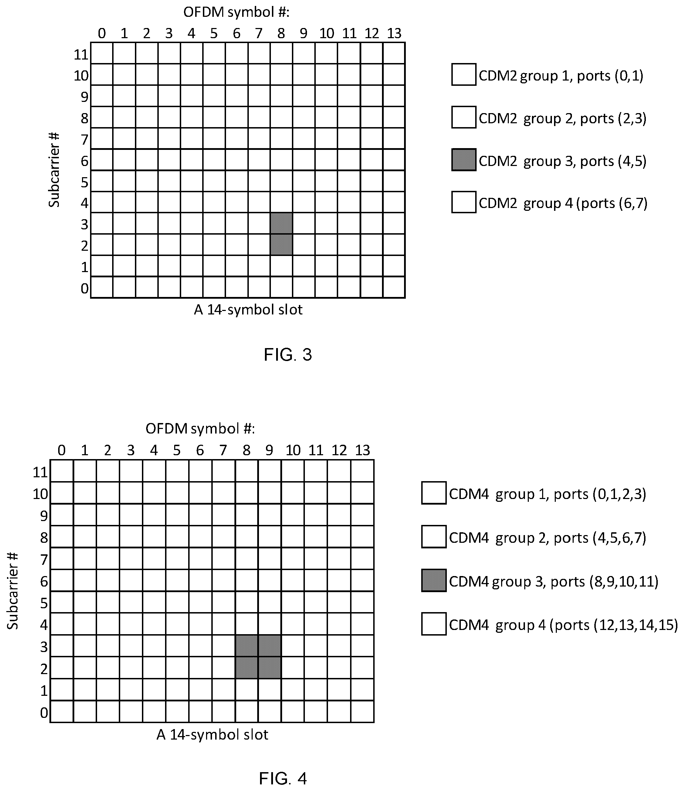

CSI-RS are reference signals used for CSI estimations by a WD. The WD estimates individual radio propagation channel between each transmit antenna port at a gNB and a receive antenna at the WD based on the received CSI-RS. Each antenna port carries a CSI-RS signal in certain REs and slots in NR. An example of REs used for carrying CSI-RS signals for eight antenna ports is shown in FIG. 3, where one PRB over one slot is shown. The CSI-RS are typically transmitted in the same REs in every PRB within a configured bandwidth. In this example, the CSI-RS resource for the eight ports consists of four RE pairs in one OFDM symbol. Two antenna ports are code division multiplexed (CDM) multiplexed on a pair of adjacent REs using length two orthogonal cover codes (OCC), or CDM2.

Another example of CSI-RS resource for 16 ports is shown in FIG. 4, where 16 REs in two OFDM symbols are allocated. The REs are further divided in four groups, each with 4 adjacent REs. Four antenna ports are code division multiplexed (CDM) multiplexed on a group of 4 adjacent REs using two by two orthogonal cover codes (OCC), or CDM4.

Table 1 below lists all the possible RE patterns for a CSI-RS resource in NR. In Table 1 Y and Z respectively indicate the number of adjacent subcarriers and OFDM symbols, respectively, that form a component resource. For example, (Y,Z) = (2,2) means that the component resource contains 4 REs in two adjacent subcarriers and two adjacent OFDM symbols. A CSI-RS resource can contain one or multiple such component resources. Furthermore, in Table 1, the following notations are used for CDM:

- FD-CDM2 means CDM2 (i.e., using length two OCC) over two REs along frequency,
- CDM4 (FD2,TD2) means CDM4 (i.e. using length four OCC) over two REs along frequency and two REs along time.
- CDM8 (FD2,TD4) means CDM8 (i.e., using length eight OCC) over two REs along frequency and four REs along time.

In case of density 1, a CSI-RS is transmitted in every PRB in the frequency domain and in case of density ½, a CSI-RS is transmitted in every other PRB in the frequency domain, either even or odd numbered PRBs.

Table 1: RE patterns for CSI-RS resource in NR

| Number of ports | Density [RE/RB/port] | Number of OFDM symbols | (Y, Z) | CDM |
|---|---|---|---|---|
| 1 | >1, 1, 1/2 | 1 | N.A. | No CDM |
| 2 | 1, 1/2 | 1 | (2,1) | FD-CDM2 |
| 4 | 1 | 1 | (4,1) | FD-CDM2 |
| 8 | 1 | 1 | (2,1) | FD-CDM2 |
| 8 | 1 | 2 | (2,2) | FD-CDM2, CDM4 (FD2,TD2) |
| 12 | 1 | 1 | (2,1) | FD-CDM2 |
| 12 | 1 | 2 | (2,2) | CDM4 (FD2,TD2) |
| 16 | 1, 1/2 | 2 | (2,2) | FD-CDM2, CDM4 (FD2,TD2) |
| 24 | 1, 1/2 | 4 | (2,2) | FD-CDM2, CDM4 (FD2, TD2), CDM8 (FD2, TD4) |
| 32 | 1, 1/2 | 4 | (2,2) | FD-CDM2, CDM4 (FD2, TD2), CDM8 (FD2, TD4) |

Non-PMI CSI feedback for reciprocity based operation

In reciprocity based operation, the uplink channel is estimated based on uplink reference signals such as sounding reference signal (SRS). In a time division duplexing (TDD) system, the same carrier frequency is used for both downlink and uplink. So the estimated uplink channel can be used to derive downlink precoding matrix $W$. However, since the downlink interference experienced at a WD is typically different from the uplink interference experienced by the gNB, it is difficult to accurately derive CQI (Channel Quality Indicator) based on uplink channel estimation. CQI may be used in LTE and NR to indicate a modulation and coding rate that can be used for data transmission, it may generally be determined by the signal to noise plus interference ratio (SINR) at a receiver and the receiver types.

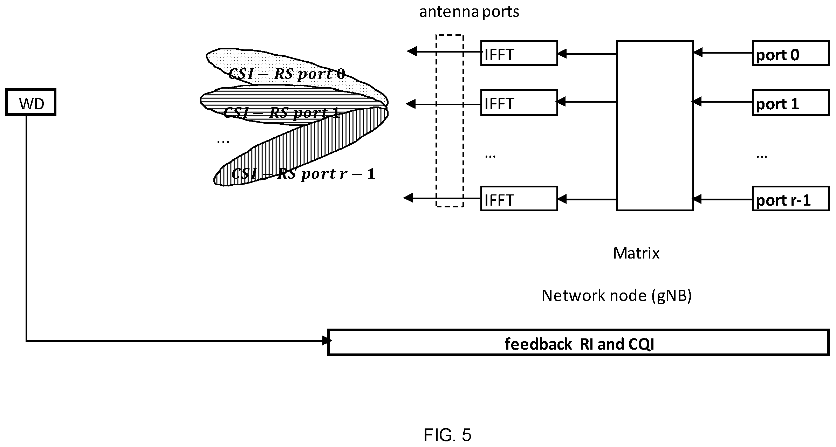

To improve link adaptation in reciprocity based operation, a non-PMI feedback scheme has been adopted in NR in which the gNB transmits precoded CSI-RS to a WD. An example is shown in FIG. 5, where each precoded CSI-RS port corresponds to a MIMO layer and the precoding matrix $W_{NT \times r}$ is derived from the uplink, where $r$ is the number of MIMO layers estimated based on the uplink channel. The WD estimates the actual rank and CQI based on the received CSI-RS and the actual interference seen by the WD and feeds back the estimated rank and CQI. For rank and CQI calculation, the WD assumes a single precoder for each rank. The precoder for rank k is a matrix formed by the first k columns of an PxP identity matrix, where P is the number of precoded CSI-RS ports and P=r in the example.

In a 3rd Generation Partnership Project (3GPP) Radio Access Network (RAN) Work Group 1 (RAN1) meeting, non-PMI feedback was considered in which a subset of the ports in a CSI-RS resource configured for a WD may be precoded and transmitted to a WD, so the subset of the ports need to be further signaled to the WD for non-PMI feedback. For example, the WD may be configured with a 16-port CSI RS resource and only 4 ports may be used for actual precoded CSI-RS transmission. It was considered that the signaling of port indices may be done semi-statically through radio resource control (RRC) signaling. The following was considered for NR:

"For non-PMI feedback, support the following port index indication method:

- Port index indication is signaled to WD for RI/CQI calculation in non-PMI feedback;

  o Port index indication per CSI-RS resource is configured by RRC to select the CSI-RS port(s) used for RI/CQI calculation per rank;

    ▪ Identity matrix is assumed by WD on the selected CSI-RS ports for RI/CQI calculation;
    ▪ N ports are selected for rank N;
    ▪ The CSI-RS resource can be dynamically selected for CSI reporting in CSI framework"

CSI framework in NR

It has been considered that in NR a WD can be configured with N'≥1 CSI reporting settings, M'≥1 Resource settings, and one CSI measurement setting, where the CSI measurement setting includes L' ≥1 links. Each of the L' links corresponds to a CSI reporting setting and a resource setting.

At least the following configuration parameters are signaled via RRC at least for CSI acquisition:

- N', M', and L' - indicated either implicitly or explicitly
- In each CSI reporting setting, at least: reported CSI parameter(s), CSI Type (I or II) if reported, codebook configuration including codebook subset restriction, time-domain behavior (i.e. periodic, semi-persistent, or aperiodic), frequency granularity for CQI and PMI, measurement restriction configurations
- In each resource setting:

  o A configuration of S'≥1 CSI-RS resource set(s);

    ▪ Note: each set corresponds to different selections from a "pool" of all configured CSI-RS resources to the WD;

  o A configuration of K's ≥1 CSI-RS resources for each set s, including at least: mapping to REs, the number of ports, time-domain behavior, etc.;
  o In each of the L' links in CSI measurement setting: CSI reporting setting indication, Resource setting indication, quantity to be measured (either channel or interference);

    ▪ One CSI reporting setting can be linked with one or multiple Resource settings;
    ▪ Multiple CSI reporting settings can be linked with the same Resource setting.

At least following are dynamically selected by Layer 1 or Layer 2 signaling, if applicable:

- One or multiple CSI reporting settings within the CSI measurement setting;
- One or multiple CSI-RS resource sets selected from at least one Resource setting;
- One or multiple CSI-RS resources selected from at least one CSI-RS resource set.

Although it was considered that for non-PMI CSI feedback, port index indication per CSI-RS resource is configured by radio resource control (RRC) to select the CSI-RS port(s) used for RI/CQI calculation per rank, exactly how to configure the port index indication by RRC is an open problem. In addition, for the selected ports, how the precoder is applied to the ports is another open problem.

Document "Discussion on CSI Measurement", Oppo, 3GPP document, R1-1718053, discloses an evaluation on CSI measurement. The following proposals were made. Proposal 1: For non-PMI codebook, NR supports Alt B: Port index indication is signaled to UE for RI/CQI calculation in non-PMI feedback. Proposal 2: For non-PMI codebook, NR supports dynamic signaling to indicate the port selection for CQI calculation, e.g., RRC + DCI; RRC indicates M configurations of port selection, and DCI indicates which out of M to be used for the UE. Proposal 3: For NZP CSI-RS based interference, NR supports the following alternative: Alt.1, a single CSI-RS resource for both channel and interference measurement.

Document "Transparent vs. non-transparent MU-MIMO operation", Qualcomm Europe, 3GPP draft, R1-094873, discloses a technique pertaining to transparent MU/SU operation. Features required in Release 10 to extend the transparent operation of SU and MU beyond Release 9. The features are similar to those agreed in Release 9 for dual-stream beamforming. The following proposals were made. UE-RS and control signalling aspects: Limiting the orthogonal multiplexing of users in Release 10 to total composite rank of 4; UE-independent and cell-specific sequence initialization for UE-RS: Similar to Release 9 consider limiting the possible sequence IDs to two values; Signalling of UE-RS antenna ports and UE-RS pattern in a dynamic fashion in DL control grant; One possible way of such signalling is using 2 bits for UE-RS offset and 1 bit for UE-RS pattern indication; Considering joint indication of UE-RS antenna ports and rank to reduce signalling overhead. Feedback aspects: Adopting one transmission mode common for SU and MU operation; Additional codebooks should be considered in Rel-10 for the Rel-8 antenna configurations and new antenna configurations: Codebooks with higher granularity for achieving transmit nulling gains, and the configurable/downloadable codebook design for various antenna configurations and propagation conditions should be considered; Common CQI/RI report for different spatial processing techniques (SU-MIMO, MU-MIMO and CoMP) that follows Release 8 feedback design, closed loop: CQI/RI report along with CDI, and open loop: CQI/RI based on open loop precoding; employing feedback compression and encoding that scales to different spatial processing techniques: feedback compression in the form of feeding back only the dominant-Eigen vectors of the channel, and feedback encoding based on multiple description coding (MDC) or multi-level coding (MLC) that exploits the time/frequency correlations to reduce feedback overhead can be considered.

Document "On CSI measurement", Ericsson, 3GPP draft, R1-1718431, discloses a technique pertaining to CSI measurement. The following observations were made. Observation 1: Up to 254 bits are required for signaling CBSR with an 8-port CSI-RS resource, dynamic signaling of CBSR is clearly not feasible. Observation 2: Use case for semi-static signaling of CBSR for non-PMI CSI feedback in Alt. A (port selection codebook is used for CQI calculation for non-PMI feedback) is unclear. Observation 3: Up to 7 bits are required in Alt. B (Port index indication is signaled to UE for RI/CQI calculation in non-PMI feedback) for full flexible port index indication with an 8 ports CSI-RS resource, dynamic signaling is clearly not feasible. Observation 4: The use case of port index indication is unclear. Supporting it would make the CSI framework complicated. Observation 5: For interference measurement with NZP CSI-RS resource, up to 6 bits are required for dynamically signaling the ports for channel measurement in Alt.1 (single CSI-RS resource for both channel and interference measurement). Observation 6: For interference measurement with NZP CSI-RS in Alt. 2 (separately configured CSI-RS resources for channel and interference measurement), dynamic signaling of NZP CSI-RS resource can be avoided for both channel and interference measurement. Observation 7: ZP CSI-RS should be configured on the same REs available for NZP CSI-RS. Observation 8: A CSI-IM size of 4-6 REs/PRB gives sufficient interference estimation quality. The following proposals were made. Proposal 1: For non-PMI CSI feedback for reciprocity operation, Alt. B with port index indication signaled via RRC is supported and the number of ports selected/indicated can be the same as the number of ports in the CSI-RS resource. Proposal 2: For NZP CSI-RS based MU interference measurement, Alt.2 is supported in which a set of NZP CSI-RS resources is signaled to each UE. A UE is dynamically indicated with the set of NZP CSI-RS resources, the UE selects a NZP CSI-RS resource in the resource set for RI and CQI measurement by assuming the rest of the NZP CSI-RS resource in the resource set are for interference measurement, the UE feedbacks a CRI, RI and CQI, the RI and CQI are calculated by assuming a codebook with a single entry for each rank and the entry for rank K consists of the first K columns of a RxR identity matrix, where R is the number of NZP CSI-RS ports of the NZP CSI-RS resource for channel measurement. Proposal 3: ZP CSI-RS is configured with a bitmap with each bit associated with a 2x1 component REs. Proposal 4: Frequency domain channel and interference measurement restriction configuration is achieved by configuring a CSI reporting band which spans only a subset of subbands in BWP. No additional mechanism is needed. Proposal 5: Time domain measurement restriction for channel or interference is achieved by configuring MR either to measure channel or interference in a single slot (one shot) or an unrestricted number of slots (no restriction).

SUMMARY

According to the present disclosure, methods, computer-readable media, a network node and a wireless device according to the independent claims are provided. Developments are set forth in the dependent claims.

Some embodiments advantageously provide port index signaling for non-precoder matrix indicator (PMI) channel state information (CSI) feedback.

Some RRC signaling methods for port index indication are proposed, which may include, for example:

1. a bitmap based approach, in which each bit is associated with one port in the CSI-RS resource and a port is selected if the corresponding bit in the bitmap is set to 1;
2. signaling a starting port index and number of ports, in which only adjacent ports in a CSI-RS resource are selected; and
3. port index is restricted to be in the same code division multiplex (CDM) group(s) or to be in the OFDM symbol.

In some embodiments, for precoder determination, N selected ports may be arranged in ascending order according to port indices, a precoding matrix for rank k consisting of the first k columns for an NxN identity matrix, with the first element of each column of the identity matrix associated with the first port having the smallest port index and the last element of each column of the identity matrix associated with the last port having the largest port index.

According to one aspect, a network node configured to communicate with a wireless device, WD, is provided. The network node includes processing circuitry configured to generate at least one port indication in one of a rank-nested and a non-rank-nested manner; and a radio interface configured to signal the at least one port indication in the one of the rank-nested and the non-rank-nested manner.

In some embodiments of this aspect, the at least one port indication includes at least one port index indication. In some embodiments of this aspect, the radio interface is configured to signal the at least one port indication by being further configured to signal the at least one port indication in a channel state information, CSI, report setting configuration. In some embodiments of this aspect, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments of this aspect, in the rank-nested manner, the at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments of this aspect, in the non-rank-nested manner, the at least one port indication includes a plurality of port indications, each one of the plurality of port indications for each associated rank. In some embodiments of this aspect, the at least one port indication for rank k (k=1,2,...,8) includes k port indices for a rank k CSI measurement. In some embodiments of this aspect, the at least one port indication is signalled to the wireless device. In some embodiments of this aspect, the at least one port indication includes at least one port index indication, the at least one port index indication indicating port indices in at least one channel state information reference signal, CSI-RS, resource. In some embodiments of this aspect, the radio interface is configured to receive, from the wireless device, a non-precoder matrix indicator, non-PMI, channel state information, CSI, feedback, the non-PMI CSI feedback including a rank indicator, RI, and at least one channel quality indicator, CQI.

According to another aspect, a method for a network node is provided. The method includes generating at least one port indication in one of a rank-nested and a non-rank-nested manner; and signalling the at least one port indication in the one of the rank-nested and the non-rank-nested manner.

In some embodiments of this aspect, the at least one port indication includes at least one port index indication. In some embodiments of this aspect, the signalling the at least one port indication further comprises signalling the at least one port indication in a channel state information, CSI, report setting configuration. In some embodiments of this aspect, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments of this aspect, in the rank-nested manner, the at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments of this aspect, in the non-rank-nested manner, the at least one port indication includes a plurality of port indications, each one of the plurality of port indications for each associated rank. In some embodiments of this aspect, the at least one port indication for rank k (k=1,2,...,8) includes k port indices for a rank k CSI measurement. In some embodiments of this aspect, the signalling the at least one port indication further comprises signalling the at least one port indication to the wireless device. In some embodiments of this aspect, the at least one port indication includes at least one port index indication, the at least one port index indication indicating port indices in at least one channel state information reference signal, CSI-RS, resource. In some embodiments of this aspect, the method further includes receiving, from the wireless device, a non-precoder matrix indicator, non-PMI, channel state information, CSI, feedback, the non-PMI CSI feedback including a rank indicator, RI, and at least one channel quality indicator, CQI.

According to yet another aspect, a wireless device, WD, configured to communicate with a network node is provided. The WD includes a radio interface configured to receive at least one port indication from a network node, the at least one port indication being received in one of a rank-nested and a non-rank-nested manner; and processing circuitry configured to generate channel state information, CSI, feedback based on the at least one port indication.

In some embodiments of this aspect, the at least one port indication includes at least one port index indication. In some embodiments of this aspect, the at least one port indication is included in a channel state information, CSI, report setting configuration. In some embodiments of this aspect, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments of this aspect, in the rank-nested manner, the received at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments of this aspect, in the non-rank-nested manner, the received at least one port indication includes a plurality of port indications, each one of the plurality of port indications for each associated rank. In some embodiments of this aspect, the at least one port indication includes a plurality of portion indications and one of the plurality of port indications for rank k (k=1,2,...,8) includes k port indices for a rank k CSI measurement. In some embodiments of this aspect, the at least one port indication includes a plurality of portion indications and each one of the plurality of port indications includes one port index indication, the at least one port index indication indicating port indices in at least one channel state information reference signal, CSI-RS, resource. In some embodiments of this aspect, the generated CSI-RS feedback comprises a non-precoder matrix indicator, non-PMI, channel state information, CSI, feedback, the non-PMI CSI feedback including a rank indicator, RI, and at least one channel quality indicator, CQI.

According to another aspect, a method for a wireless device, WD, is provided. The method includes receiving at least one port indication from a network node, the at least one port indication being received in one of a rank-nested and a non-rank-nested manner; and generating channel state information, CSI, feedback based on the at least one port indication.

In some embodiments of this aspect, the at least one port indication includes at least one port index indication. In some embodiments of this aspect, the receiving the at least one port indication further comprises receiving the at least one port indication in a channel state information, CSI, report setting configuration. In some embodiments of this aspect, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments of this aspect, in the rank-nested manner, the received at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments of this aspect, in the non-rank-nested manner, the received at least one port indication includes a plurality of port indications, each one of the plurality of port indications for each associated rank. In some embodiments of this aspect, the at least one port indication includes a plurality of portion indications and one of the plurality of port indications for rank k (k=1,2,...,8) includes k port indices for a rank k CSI measurement. In some embodiments of this aspect, the at least one port indication includes a plurality of portion indications and each one of the plurality of port indications includes one port index indication, the at least one port index indication indicating port indices in at least one channel state information reference signal, CSI-RS, resource. In some embodiments of this aspect, the generating the CSI-RS feedback comprises generating a non-precoder matrix indicator, non-PMI, channel state information, CSI, feedback, the non-PMI CSI feedback including a rank indicator, RI, and at least one channel quality indicator, CQI.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a time-frequency grid;

FIG. 2 is an illustration of the spatial multiplexing operation;

FIG. 3 is an example of REs used for carrying CSI-RS signals for eight antenna ports;

FIG. 4 is an example of CSI-RS resource for 16 ports;

FIG. 5 is an example of non-PMI feedback, where each precoded CSI-RS port corresponds to a MIMO layer;

FIG. 6 is a schematic diagram of an exemplary network architecture illustrating a telecommunication network connected via an intermediate network to a host computer according to the principles in the present disclosure;

FIG. 7 is a block diagram of a host computer communicating via a network node with a wireless device over an at least partially wireless connection according to some embodiments of the present disclosure;

FIG. 8 is a block diagram of an alternative embodiment of a network node according to some embodiments of the present disclosure;

FIG. 9 is a block diagram of an alternative embodiment of a wireless device according to some embodiments of the present disclosure;

FIG. 10 is a block diagram of an alternative embodiment of a host computer according to some embodiments of the present disclosure;

FIG. 11 is a flowchart illustrating exemplary methods implemented in a communication system including a host computer, a network node and a wireless device for executing a client application at a wireless device according to some embodiments of the present disclosure;

FIG. 12 is a flowchart illustrating exemplary methods implemented in a communication system including a host computer, a network node and a wireless device for receiving user data at a wireless device according to some embodiments of the present disclosure;

FIG. 13 is a flowchart illustrating exemplary methods implemented in a communication system including a host computer, a network node and a wireless device for receiving user data from the wireless device at a host computer according to some embodiments of the present disclosure;

FIG. 14 is a flowchart illustrating exemplary methods implemented in a communication system including a host computer, a network node and a wireless device for receiving user data at a host computer according to some embodiments of the present disclosure;

FIG. 15 is a flowchart of an exemplary process in a network node for generating and signaling a port index indication according to some embodiments of the present disclosure;

FIG. 16 is a flowchart of an exemplary process in a wireless device for receiving and processing a port index indication according to some embodiments of the present disclosure;

FIG. 17 is a flowchart of an exemplary process in a network node for generating a port index indication based on signaling received from a wireless device according to some embodiments of the present disclosure; and

FIG. 18 is a flowchart of an exemplary process in a wireless device for signaling an indication of desired ports according to some embodiments of the present disclosure.

DETAILED DESCRIPTION

Before describing in detail exemplary embodiments, it is noted that the embodiments reside primarily in combinations of apparatus components and processing steps related to port index signaling for non-precoder matrix indicator (PMI) channel state information (CSI) feedback. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or a wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Note that although terminology from one particular wireless system, such as, for example, 3GPP LTE, may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments provide methods, wireless devices and network nodes for port index signaling for non-precoder matrix indicator (PMI) channel state information (CSI) feedback. The signaling includes a bitmap based approach in which each bit is associated with a different port in the CSI-RS resource of a WD. A port is selected by selecting its associated bit. Alternatively, the signaling includes a starting port index and a number of ports. Alternatively, the port index may be restricted to be in the same CDM group. Thus, embodiments provide alternatives for configuring the port index by RRC.

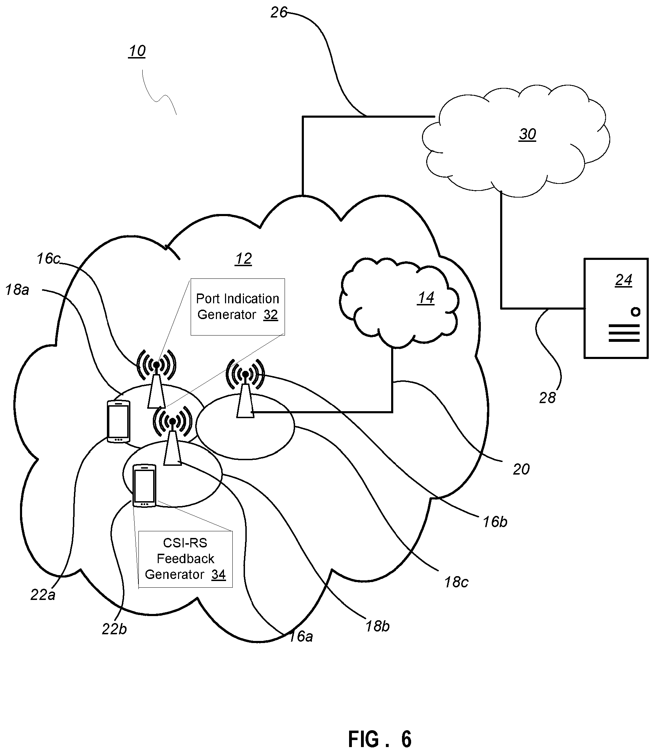

Returning to the drawing figures, in which like elements are referred to by like reference numerals, there is shown in FIG. 6 a schematic diagram of a communication system, according to an embodiment, including a communication system 10, such as a 3GPP-type cellular network, which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16c. A second WD 22b in coverage area 18b is wirelessly connectable to the corresponding network node 16a. While a plurality of WDs 22a, 22b (collectively referred to as wireless devices 22) are illustrated in this example, the disclosed embodiments are equally applicable to a situation where a sole WD 22 is in the coverage area or where a sole WD 22 is connecting to the corresponding network node 16. Note that although only two WDs 22 and three network nodes 16 are shown for convenience, the communication system may include many more WDs 22 and network nodes 16.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 6 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a port indication generator 32, which is configured to generate at least one port indication in one of a rank nested and a non-rank nested manner; and signal the at least one port indication in the one of the rank nested and the non-rank nested manner. In an alternative embodiment, the network node 16 is configured to include the port indication generator 32, which may be configured to receive signalling indicating at least one desired port for channel state information, CSI feedback, the at least one desired port associated with a rank; and generate at least one port indication based at least in part on the received signaling.

A wireless device 22 is configured to include a CSI feedback generator 34, which is configured to receive at least one port indication from a network node, the at least one port indication being signalled in one of a rank nested and a non-rank nested manner; and generate channel state information, CSI, feedback based on the at least one port indication. In an alternative embodiment, the wireless device 22 includes a CSI feedback generator 34, which is configured to determine a signal-to-interference-plus-noise ratio, SINR, of at least one hypothesized serving port; and signal an indication of at least one desired port for channel state information, CSI feedback based at least in part on the determined SINR, the at least one desired port associated with a rank calculation.

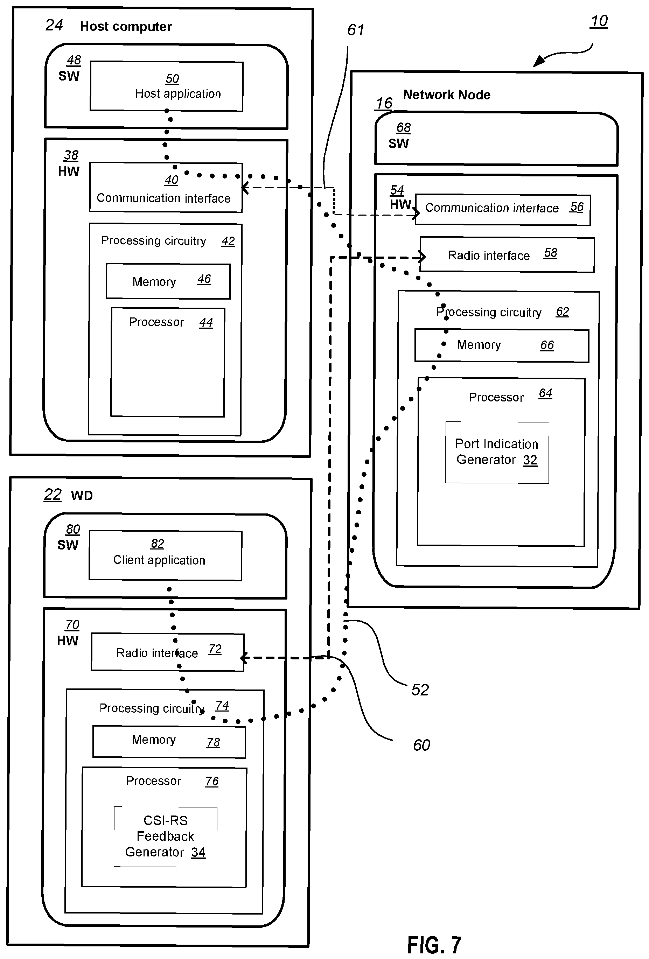

Example implementations, in accordance with an embodiment, of the WD 22, network node 16 and host computer 24 discussed in the preceding paragraphs will now be described with reference to FIG. 7. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to a traditional processor and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

Thus, the host computer 24 may further comprise software (SW) 48, which is stored in, for example, memory 46 at the host computer 24, or stored in external memory (e.g., database) accessible by the host computer 24. The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. In one embodiment, the host computer 24 may be configured for providing control and functionality to a service provider and may be operated by the service provider or on behalf of the service provider. The processing circuitry 42 of the host computer 24 may be configured to enable the service provider to observe functionality of and process data from the network node 16 and/or the wireless device 22.

The communication system 10 further includes a network node 16 provided in a telecommunication system 10 and comprising hardware 54 enabling it to communicate with the host computer 24 and with the WD 22. The hardware 54 may include a communication interface 56 for setting up and maintaining a wired or wireless connection with an interface of a different communication device of the communication system 10, as well as a radio interface 58 for setting up and maintaining at least a wireless connection 60 with a WD 22 located in a coverage area 18 served by the network node 16. The radio interface 58 may be formed as or may include, for example, one or more RF transmitters, one or more RF receivers, and/or one or more RF transceivers. The communication interface 56 may be configured to facilitate a connection 61 to the host computer 24. The connection 61 may be direct or it may pass through a core network 14 of the telecommunication system 10 and/or through one or more intermediate networks 30 outside the telecommunication system 10.

In the embodiment shown, the hardware 54 of the network node 16 further includes processing circuitry 62. The processing circuitry 62 may include a processor 64 and a memory 66. In particular, in addition to a traditional processor and memory, the processing circuitry 62 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 64 may be configured to access (e.g., write to and/or read from) the memory 66, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 68 stored internally in, for example, memory 66 or stored in external memory (e.g., database) accessible by the network node 16 via an external connection. The software 68 may be executable by the processing circuitry 62. The processing circuitry 62 may be configured to control any of the methods and/or processes described herein and/or to cause such methods, and/or processes to be performed, e.g., by network node 16. Processor 64 corresponds to one or more processors 64 for performing network node 16 functions described herein. The memory 66 is configured to store data, programmatic software code and/or other information described herein. In some embodiments, the software 68 may include instructions that, when executed by the processor 64 and/or processing circuitry 62, causes the processor 64 and/or processing circuitry 62 to perform the processes described herein with respect to network node 16. For example, processing circuitry 62 of the network node 16 may include a port indication generator 32 to generate a port index indication. The port indication generator 32 may be configured to generate at least one port indication in one of a rank nested and a non-rank nested manner. The radio interface 58 may be configured to signal the at least one port indication in the one of the rank nested and the non-rank nested manner.

In some embodiments, the at least one port indication includes at least one port index indication. In some embodiments, the radio interface 58 is configured to signal the at least one port indication by being further configured to signal the at least one port indication in a channel state information, CSI, report setting configuration. In some embodiments, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments, in the rank-nested manner, the at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments, in the non-rank-nested manner, the at least one port indication includes a plurality of port indications, each one of the plurality of port indications for each associated rank. In some embodiments, the at least one port indication for rank k (k=1,2,...,8) includes k port indices for a rank k CSI measurement. In some embodiments, the at least one port indication is signalled to the wireless device. In some embodiments, the at least one port indication includes at least one port index indication, the at least one port index indication indicating port indices in at least one channel state information reference signal, CSI-RS, resource. In some embodiments, the radio interface 58 is configured to receive, from the wireless device, a non-precoder matrix indicator, non-PMI, channel state information, CSI, feedback, the non-PMI CSI feedback including a rank indicator, RI, and at least one channel quality indicator, CQI.

In an alternative embodiment, the network node 16 may include a port indication generator 32, which is configured to, such as via radio interface 58, receive signalling indicating at least one desired port for channel state information, CSI feedback, the at least one desired port associated with a rank; and generate, such as via processing circuitry 62, at least one port indication based at least in part on the received signaling.

In some embodiments, the at least one port indication includes at least one port index indication. In some embodiments, the signalling indicating the at least one desired port corresponds to a table. In some embodiments, the signalling indicating the at least one desired port is in the CSI feedback.

The communication system 10 further includes the WD 22 already referred to. The WD 22 may have hardware 70 that may include a radio interface 72 configured to set up and maintain a wireless connection 60 with a network node 16 serving a coverage area 18 in which the WD 22 is currently located. The radio interface 72 may be formed as or may include, for example, one or more RF transmitters, one or more RF receivers, and/or one or more RF transceivers.

The hardware 70 of the WD 22 further includes processing circuitry 74. The processing circuitry 74 may include a processor 76 and memory 78. In particular, in addition to a traditional processor and memory, the processing circuitry 74 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 76 may be configured to access (e.g., write to and/or read from) memory 78, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 further comprises software 80, which is stored in, for example, memory 78 at the WD 22, or stored in external memory (e.g., database) accessible by the WD 22. The software 80 may be executable by the processing circuitry 74. The software 80 includes a client application 82. The client application 82 may be operable to provide a service to a human or non-human user via the WD 22, with the support of the host computer 24. In the host computer 24, an executing host application 50 may communicate with the executing client application 82 via the OTT connection 52 terminating at the WD 22 and the host computer 24. In providing the service to the user, the client application 82 may receive request data from the host application 50 and provide user data in response to the request data. The OTT connection 52 may transfer both the request data and the user data. The client application 82 may interact with the user to generate the user data that it provides.

Processing circuitry 74 may be configured to control any of the methods and/or processes described herein and/or to cause such methods, and/or processes to be performed, e.g., by WD 22. Processor 78 corresponds to one or more processors 76 for performing WD 22 functions described herein. The WD 22 includes memory 78 that is configured to store data, programmatic software code and/or other information described herein. In some embodiments, the software 80 and/or the client application 82 may include instructions that, when executed by the processor 76 and/or processing circuitry 74, causes the processor 76 and/or processing circuitry 74 to perform the processes described herein with respect to WD 22. For example, the processing circuitry 74 of the wireless device 22 may be configured to implement a CSI feedback generator 34 to generate CSI feedback based on ports indicated by the port index indication. The CSI feedback generator 34 may be configured to receive, such as via radio interface 72, at least one port indication from a network node 16, the at least one port indication being received in one of a rank nested and a non-rank nested manner. The CSI feedback generator 34 may be configured to generate channel state information, CSI, feedback based on the at least one port indication.

In some embodiments, the at least one port indication includes at least one port index indication. In some embodiments, the at least one port indication is included in a channel state information, CSI, report setting configuration. In some embodiments, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments, In some embodiments, in the rank-nested manner, the received at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments, in the non-rank-nested manner, the received at least one port indication includes a plurality of port indications, each one of the plurality of port indications for each associated rank. In some embodiments, the at least one port indication includes a plurality of portion indications and one of the plurality of port indications for rank k (k=1,2,...,8) includes k port indices for a rank k CSI measurement. In some embodiments, the at least one port indication includes a plurality of portion indications and each one of the plurality of port indications includes one port index indication, the at least one port index indication indicating port indices in at least one channel state information reference signal, CSI-RS, resource. In some embodiments, the generated CSI feedback comprises a non-precoder matrix indicator, non-PMI, channel state information, CSI, feedback, the non-PMI CSI feedback including a rank indicator, RI, and at least one channel quality indicator, CQI.

In an alternative embodiment, the WD 22 includes a CSI feedback generator 34 configured to determine a signal-to-interference-plus-noise ratio, SINR, of at least one hypothesized serving port; and configured to signal, such as a radio interface 72, an indication of at least one desired port for channel state information, CSI feedback based at least in part on the determined SINR, the at least one desired port associated with a rank calculation.

In some embodiments, the at least one port indication includes at least one port index indication. In some embodiments, the indication of the at least one desired port corresponds to a table. In some embodiments, the indication of at least one desired port is in the CSI feedback.

In some embodiments, the inner workings of the network node 16, WD 22, and host computer 24 may be as shown in FIG. 7 and independently, the surrounding network topology may be that of FIG. 6.

In FIG. 7, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 60 between the WD 22 and the network node 16 is in accordance with the teachings of the embodiments described throughout this disclosure. One or more of the various embodiments improve the performance of OTT services provided to the WD 22 using the OTT connection 52, in which the wireless connection 60 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 80 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 80 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD 22 signaling facilitating the host computer's 24 measurements of throughput, propagation times, latency and the like. In some embodiments, the measurements may be implemented in that the software 48, 80 causes messages to be transmitted, in particular empty or 'dummy' messages, using the OTT connection 52 while it monitors propagation times, errors etc.

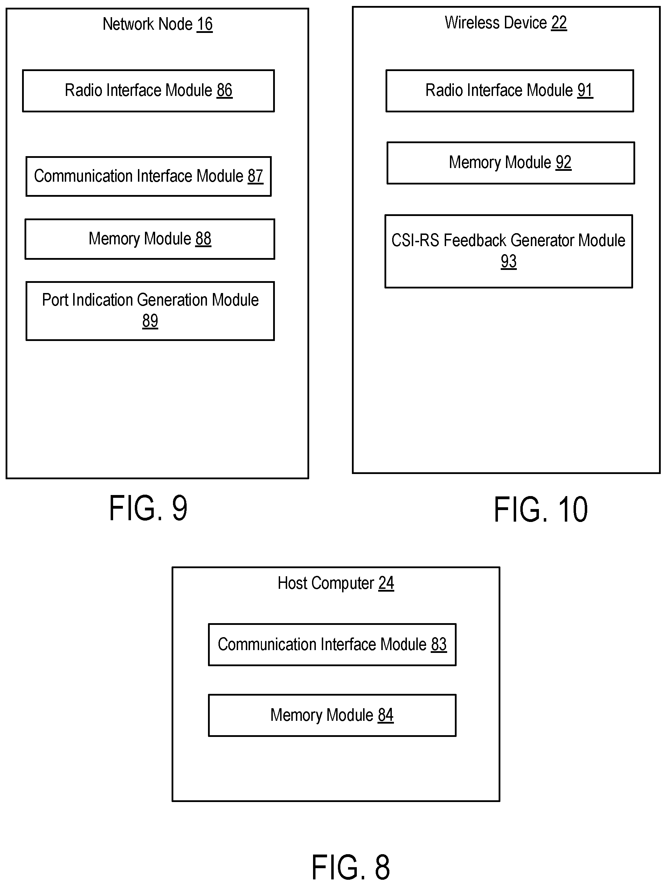

FIG. 8 is a block diagram of an alternative host computer 24, which may be implemented at least in part by software modules containing software executable by a processor to perform the functions described herein. The host computer 24 include a communication interface module 83 configured to set up and maintain a wired or wireless connection with an interface of a different communication device of the communication system 10. The memory module 84 is configured to store data, programmatic software code and/or other information described herein.

FIG. 9 is a block diagram of an alternative network node 16, which may be implemented at least in part by software modules containing software executable by a processor to perform the functions described herein. The network node 16 includes a radio interface module 86 configured for setting up and maintaining at least a wireless connection 60 with a WD 22 located in a coverage area 18 served by the network node 16. The network node 16 also includes a communication interface module 87 configured for setting up and maintaining a wired or wireless connection with an interface of a different communication device of the communication system 10. The communication interface module 87 may also be configured to facilitate a connection 52 to the host computer 24. The memory module 88 that is configured to store data, programmatic software code and/or other information described herein. The port indication generation module 89 is configured to generate a port index indication.

FIG. 10 is a block diagram of an alternative wireless device 22, which may be implemented at least in part by software modules containing software executable by a processor to perform the functions described herein. The WD 22 includes a radio interface module 91 configured to set up and maintain a wireless connection 60 with a network node 16 serving a coverage area 18 in which the WD 22 is currently located. The memory module 92 is configured to store data, programmatic software code and/or other information described herein. The CSI feedback generator module 93 is configured to generate CSI-RS feedback based on ports indicated by the port index indication.

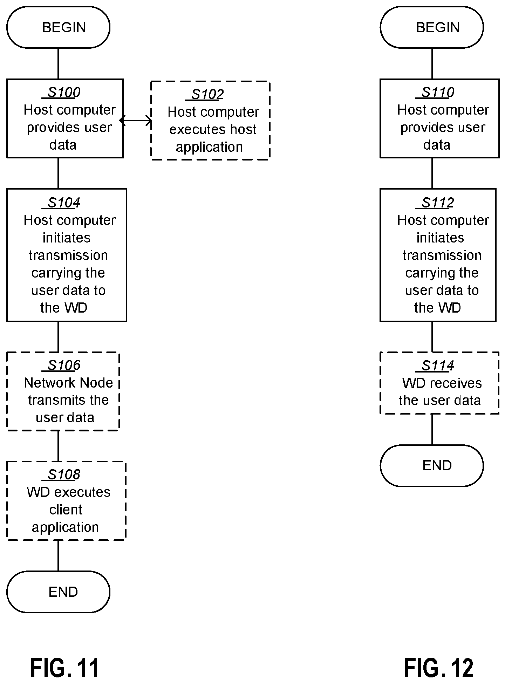

FIG. 11 is a flowchart illustrating an exemplary method implemented in a communication system, such as, for example, the communication system of FIGS. 1 and 2, in accordance with one embodiment. The communication system may include a host computer 24, a network node 16 and a WD 22, which may be those described with reference to FIG. 7. In a first step of the method, the host computer 24 provides user data (block S100). In an optional substep of the first step, the host computer 24 provides the user data by executing a host application, such as, for example, the host application 74 (block S102). In a second step, the host computer 24 initiates a transmission carrying the user data to the WD 22 (block S104). In an optional third step, the network node 16 transmits to the WD 22 the user data which was carried in the transmission that the host computer 22 initiated, in accordance with the teachings of the embodiments described throughout this disclosure (block S106). In an optional fourth step, the WD 22 executes a client application, such as, for example, the client application 114, associated with the host application 74 executed by the host computer 24 (block S108).

FIG. 12 is a flowchart illustrating an exemplary method implemented in a communication system, such as, for example, the communication system of FIG. 6, in accordance with one embodiment. The communication system may include a host computer 24, a network node 16 and a WD 22, which may be those described with reference to FIGS. 1 and 2. In a first step of the method, the host computer 24 provides user data (block S110). In an optional substep (not shown) the host computer 24 provides the user data by executing a host application, such as, for example, the host application 74. In a second step, the host computer 24 initiates a transmission carrying the user data to the WD 22 (block S112). The transmission may pass via the network node 16, in accordance with the teachings of the embodiments described throughout this disclosure. In an optional third step, the WD 22 receives the user data carried in the transmission (block S114).

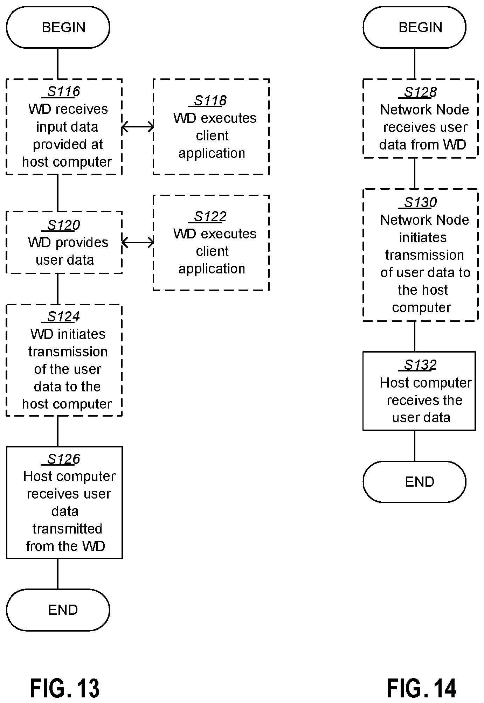

FIG. 13 is a flowchart illustrating an exemplary method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, the WD 22 receives input data provided by the host computer 24 (block S116). Additionally or alternatively, in an optional second step, the WD 22 provides user data (block S120). In an optional substep of the second step, the WD provides the user data by executing a client application, such as, for example, client application 114 (block S118). In a further optional substep of the first step, the WD 22 executes the client application 114, which provides the user data in reaction to the received input data provided by the host computer 24 (block S122). In providing the user data, the executed client application 114 may further consider user input received from the user. Regardless of the specific manner in which the user data was provided, the WD 22 may initiate, in an optional third substep, transmission of the user data to the host computer 24 (block S124). In a fourth step of the method, the host computer 24 receives the user data transmitted from the WD 22, in accordance with the teachings of the embodiments described throughout this disclosure (block S126).

FIG. 14 is a flowchart illustrating an exemplary method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, in accordance with the teachings of the embodiments described throughout this disclosure, the network node 16 receives user data from the WD 22 (block S128). In an optional second step, the network node 16 initiates transmission of the received user data to the host computer 24 (block S130). In a third step, the host computer 24 receives the user data carried in the transmission initiated by the network node 16 (block S132).

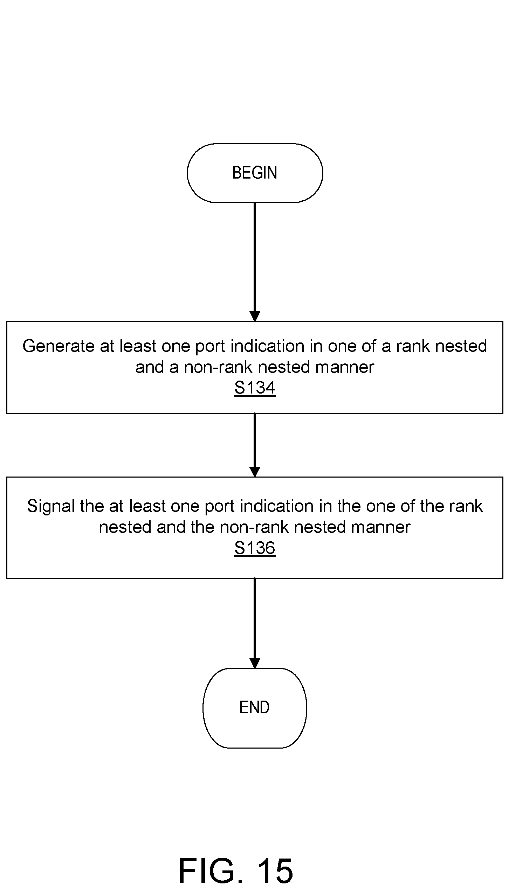

FIG. 15 is a flowchart of an exemplary process in a network node 16 for generating and signaling a port index indication according to some embodiments of the present disclosure. One or more blocks and/or functions and/or methods performed by the network node 16 may be performed by one or more elements of network node 16 such as by port indication generator 32 in processing circuitry 62, processor 64, radio interface 58, etc. According to the example method, which includes generating (block S134) at least one port indication in one of a rank nested and a non-rank nested manner; and signalling (block S136) the at least one port indication in the one of the rank nested and the non-rank nested manner.

In some embodiments, the at least one port indication includes at least one port index indication. In some embodiments, the signalling the at least one port indication further comprises signalling, such as via radio interface 58, the at least one port indication in a channel state information, CSI, report setting configuration. In some embodiments, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments, in the rank-nested manner, the at least one port indication includes a list of port indices in which a first port index in the list indicates a port for a rank 1 channel state information, CSI, measurement, first two port indices in the list indicates ports for a rank 2 CSI measurement, one or more first k $(k=1,2,...,8)$ port indices in the list indicates one or more ports for a rank k CSI measurement. In some embodiments, in the non-rank-nested manner, the at least one port indication includes a plurality of port indications, each one of the plurality of port indications for each associated rank. In some embodiments, the at least one port indication for rank k $(k=1,2,...,8)$ includes k port indices for a rank k CSI measurement. In some embodiments, the signalling the at least one port indication further comprises signalling, such as via radio interface 58, the at least one port indication to the wireless device. In some embodiments, the at least one port indication includes at least one port index indication, the at least one port index indication indicating port indices in at least one channel state information reference signal, CSI-RS, resource. In some embodiments, the method further includes receiving, from the wireless device 22, a non-precoder matrix indicator, non-PMI, channel state information, CSI, feedback, the non-PMI CSI feedback including a rank indicator, RI, and at least one channel quality indicator, CQI.

Alternatively, or in addition, the process includes generating, via the port indication generator 32, a port index indication. The process also includes signaling, via the radio interface 58, the port index indication to a wireless device. The signaling may be one of the following: a bitmap in which each bit is associated with one port in a channel state information-reference signal, CSI-RS, resource and a port is selected based on a value of the bit associated with the port, signaling a starting port index and number of ports in which only adjacent ports in a CSI-RS resource are selected, and restricting port indices to be in a same code division multiplex, CDM, group.

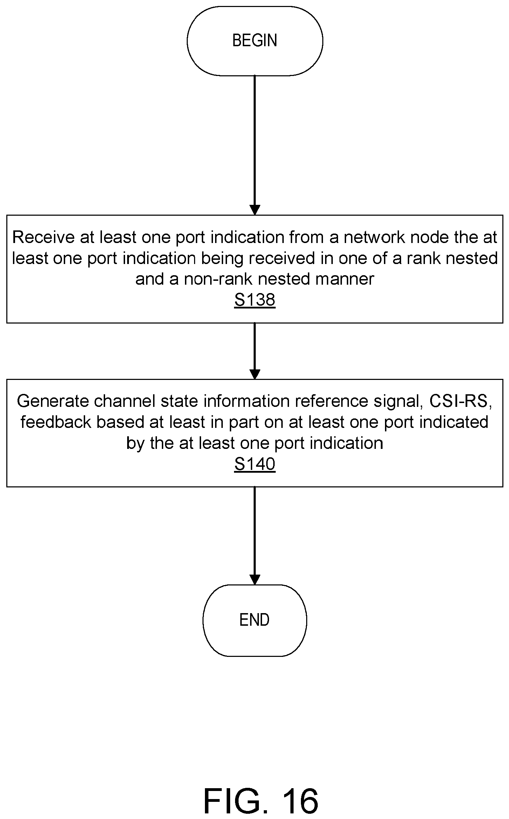

FIG. 16 is a flowchart of an exemplary process in a wireless device 22 for receiving and processing a port index indication according to some embodiments of the present disclosure. One or more blocks and/or functions and/or methods performed by WD 22 may be performed by one or more elements of WD 22 such as by CSI feedback generator 34 in processing circuitry 74, processor 76, radio interface 72, etc., which example method includes receiving (block S138), such as via radio interface 72, at least one port indication from a network node 16, the at least one port indication being received in one of a rank nested and a non-rank nested manner. The process includes generating (block S140), such as via the CSI feedback generator 34, channel state information, CSI, feedback based on the at least one port indication.

In some embodiments, the at least one port indication includes at least one port index indication. In some embodiments, the receiving the at least one port indication further comprises receiving, such as via radio interface 72, the at least one port indication in a channel state information, CSI, report setting configuration. In some embodiments, the at least one port indication indicates which ports in at least one channel state information reference signal, CSI-RS, resource to use for measuring channel quality for a rank assumption for a non-precoder matrix indicator, non-PMI, CSI feedback, the non-PMI CSI feedback being a CSI feedback without a precoder matrix indicator. In some embodiments, in the rank-nested manner, the received at least one port indication includes a list of port indices in which a first port index in the list indicates a port for a rank 1 channel state information, CSI, measurement, first two port indices in the list indicates ports for a rank 2 CSI measurement, one or more first k (k=1,2,...,8) port indices in the list indicates one or more ports for a rank k CSI measurement. In some embodiments, in the non-rank-nested manner, the received at least one port indication includes a plurality of port indications, each one of the plurality of port indications for each associated rank. In some embodiments, the at least one port indication includes a plurality of portion indications and one of the plurality of port indications rank k (k=1,2,...,8) includes k port indices for a rank k CSI measurement. In some embodiments, the at least one port indication includes a plurality of portion indications and each one of the plurality of port indications includes one port index indication, the at least one port index indication indicating port indices in at least one channel state information reference signal, CSI-RS, resource. In some embodiments, the generating the CSI feedback comprises generating, such as via the processing circuitry 74, a non-precoder matrix indicator, non-PMI, channel state information, CSI, feedback, the non-PMI CSI feedback including a rank indicator, RI, and at least one channel quality indicator, CQI.

Alternatively, or in addition, the process includes receiving, via the radio interface 72, a port index indication from a network node 16. The signaling may be one of the following: a bitmap in which each bit is associated with one port in a channel state information-reference signal, CSI-RS, resource and a port is selected based on a value of the bit associated with the port, signaling a starting port index and number of ports in which only adjacent ports in a CSI-RS resource are selected, and restricting port indices to be in a same code division multiplex, CDM, group. The process also includes generating, via the CSI feedback generator 34, CSI-RS feedback based on ports indicated by the port index indication.

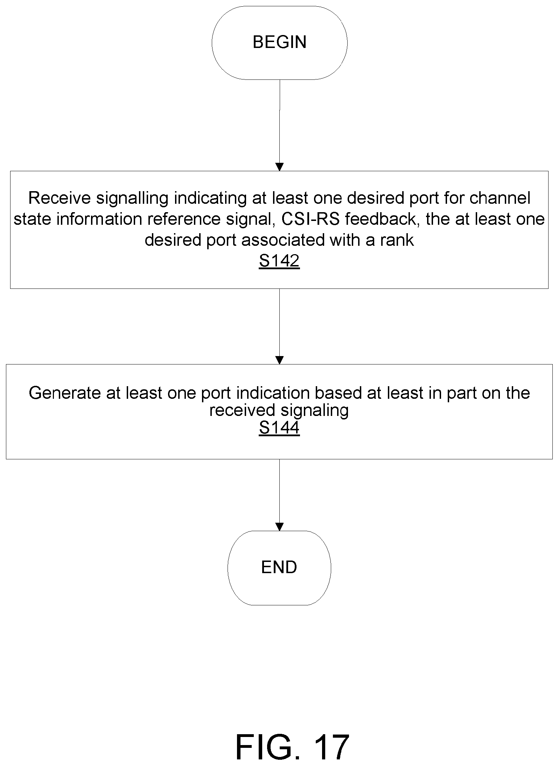

FIG. 17 is a flowchart of an yet another exemplary process in a network node 16 for generating a port index indication based on signaling received from a wireless device according to some embodiments of the present disclosure. One or more blocks and/or functions and/or methods performed by the network node 16 may be performed by one or more elements of network node 16 such as by port indication generator 32 in processing circuitry 62, processor 64, radio interface 58, etc. according to yet another example method, which includes receiving (block S142), such as via radio interface 58, signalling indicating at least one desired port for channel state information, CSI, the at least one desired port associated with a rank; and generating (block S 144), such as via port indication generator 32, at least one port indication based at least in part on the received signaling.

In some embodiments, the at least one port indication includes at least one port index indication. In some embodiments, the signalling indicating the at least one desired port corresponds to a table. In some embodiments, the signalling indicating the at least one desired port is in the CSI feedback.

Alternatively, or in addition, the process includes receiving, via the radio interface 58, signaling from a WD 22, the signaling indicating M desired ports for CSI-RS feedback. The process also includes generating, via the port indication generator 32, a port index indication based on the received signaling.

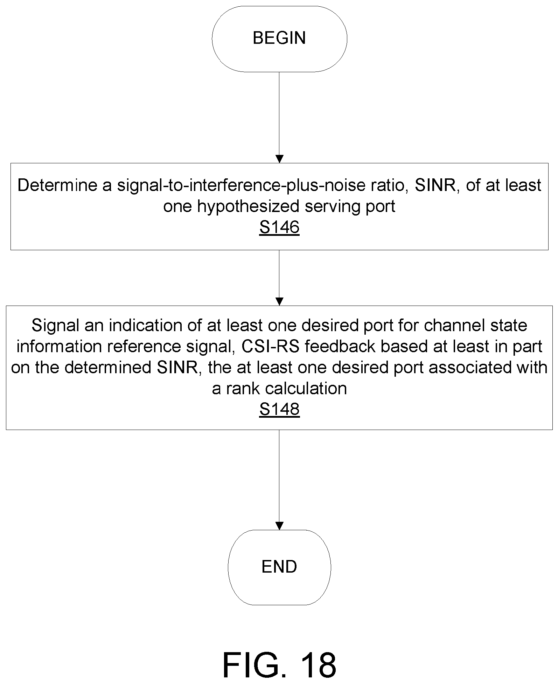

FIG. 18 is a flowchart of yet another exemplary process in a wireless device 22 for signaling an indication of desired ports according to some embodiments of the present disclosure. One or more blocks and/or functions and/or methods performed by WD 22 may be performed by one or more elements of WD 22 such as by CSI feedback generator 34 in processing circuitry 74, processor 76, radio interface 72, etc., which example method includes determining (block S146), such as via CSI feedback generator 34, a signal-to-interference-plus-noise ratio, SINR, of at least one hypothesized serving port; and signalling (block S 148), such as via radio interface 72, an indication of at least one desired port for channel state information, CSI feedback based at least in part on the determined SINR, the at least one desired port associated with a rank calculation.

In some embodiments, the indication of the at least one desired port corresponds to a table. In some embodiments, the indication of at least one desired port is in the CSI feedback.

Alternatively, or in addition, the process includes determining, via the processing circuitry 74, an SINR of different hypothesized serving ports. The process also includes signaling, via the radio interface 72, to a network node 16 an indication of M desired ports for CSI-RS feedback based on the determined SINR.

Having generally described example embodiments for a method that can be used to select any port combinations in a CSI-RS resource for the flexible allocation ports in a CSI-RS resource, the following provides more detailed explanations, examples and embodiments.

For a CSI-RS resource of P ports with port index $p_i$, (i=0,1,...,P-1), a WD 22 with M receive antennas ports can be configured to perform non-PMI CSI feedback based on the CSI-RS resource. More generally, M can be the maximum number of layers the WD 22 is able to report, or alternatively the number of layers the WD 22 is capable of receiving rather than the number of receive antennas ports. In some embodiments, general steps may include one or more of the following:
Step 1: The WD 22 is signaled with one or more CSI-RS resources or resource sets and a port index indication is also signaled to the WD 22 for each CSI-RS resource or resource set. Alternatively, the port index indication is included in a CSI report setting configuration and signaled to the WD 22. The port index indication provides information on which ports in the CSI-RS resource should be used for rank and CQI calculation for non-PMI CSI feedback. The signaling may be RRC signaling.

Step 2: The network node 16 sends a request to the WD 22 for non-PMI CSI feedback based on a CSI-RS resource and an associated port index indication.

Step 3: The WD 22 measures CSI over the selected ports in the CSI-RS resource according to the port index indication. For the given selected ports, the WD 22 may assume a precoder or precoding matrix for each rank and CSI estimation. The network node 16 should know the precoder per rank used by the WD 22. For this purpose, an implicit rule may be defined.

Step 4: The WD 22 reports to the network node 16 a rank indicator (RI) and one or two CQIs depending on the value of the RI. For example, if RI <=4, one CQI is reported and if RI>4, 2 CQIs are reported.

Step 5: The network node 16 can schedule and transmit data to the WD 22 with the reported rank RI and CQI(s) and with the precoding matrix used by the WD 22 in deriving the RI and CQI(s) over the selected ports. Let the selected N ports be denoted by $\{p_{s0}, p_{s1}, ..., p_{s(N-1)}\}$ where $s_0 < s_1 < \cdots < s_{N-1}$ and $s_i \in (0,1,...,P-1), i \in (0,1,...,N-1)$. If the reported RI=k, the precoding matrix used by the network node 16 is then $W_k = \left[ e_0^{(N)}, e_1^{(N)}, ..., e_{k-1}^{(N)} \right]$, where $e_m^{(N)}$ is a length-N column-vector with its $l$-th element set to 1 for $l = m$ ($l \in (0,1,...,N-1)$), and 0 otherwise. The $l$-th element of $e_m^{(N)}$ is associated with port $p_{sl}$. For rank $k$ transmission, ports $\{p_{s0}, p_{s1}, ... , p_{sk-1}\}$ are used.

Some example embodiments for this disclosure are discussed below.

Embodiment 1A: A bitmap-based RRC configuration for port index indication is used in the implementation of step 1. In this embodiment, a bitmap is used to indicate $N \in (1,2, \min(8, P))$ ports in the CSI-RS resource to be used for non-PMI CSI feedback. The bit map is given by

$$bitmap = \{a_0, a_1, ..., a_{P-1}\}$$

Each bit in the bit map is associated with a port in the CSI-RS resource. For example, $a_i$ ($i = 0,1,2, ..., P-1$) is associated with port $p_i$. Port $p_i$ is selected if $a_i = 1$ and is not selected if $a_i = 0$. When indicating N ports in the CSI-RS resource to be selected for non-PMI CSI feedback, there will be N bits in the bitmap that are set to 1. Let $\bar{p}_0, \bar{p}_1, ... , \bar{p}_{N-1}$ be the N selected ports.

In this embodiment, rank-nested property is assumed by the network node and the WD so that port $\bar{p}_0$ is assumed for rank-1 hypothesis, ports $\bar{p}_0, \bar{p}_1$ are assumed for rank-2 hypothesis, and so forth. That is, for a rank-R hypothesis, the WD 22 assumes that ports $\bar{p}_0, \bar{p}_1, ... , \bar{p}_{R-1}$ shall be used for deriving CSI. Similarly, when rank R is reported by the WD to the network node, ports $\bar{p}_0, \bar{p}_1, ... , \bar{p}_{R-1}$ will be used by the network node to send data to the WD. By utilizing the rank-nested property, RRC signaling overhead can be saved as only a single bitmap indicating the ports to be used for the maximum rank needs to be signaled, while the ports to be used for lower ranks may be implicitly derived.

Since the maximum number of layers the WD 22 can receive is M, if M<=8 <=P, then at most M ports correspond to desired layers, while N-M ports correspond to interference. Similarly, when the hypothesized rank R is less than M, N-R layers are interference. It is desirable in this case to identify which layers are desired and which are interference. In one embodiment, the first R ports $\bar{p}_0, \bar{p}_1, ... , \bar{p}_{R-1}$ are desired layers, while the remaining N-R ports $\bar{p}_R, \bar{p}_{R+1}, ... , \bar{p}_N$ are interference. In some embodiments the remaining N-R ports $\bar{p}_R, \bar{p}_{R+1}, ... , \bar{p}_N$ are identified as being comprised within an interference measurement resource.

If the CSI resource containing the N ports is shared by multiple WDs 22, it may be desirable to allow different WDs 22 to have different desired and interfering ports, since the ports cannot always be reordered in the CSI resource without affecting all WDs 22. Therefore, in an embodiment, a second bitmap of length N is indicated that identifies the M desired ports carrying desired layers out of the N selected ports.

$$bitmap = \{a'_0, a'_1, ..., a'_{N-1}\}$$

There are M non-zero bits out of the N bits in the bitmap, and the first non-zero bit in the bitmap corresponds to the first desired layer, while the second non-zero bit corresponds to the desired layer, and so on.

Since the WD 22 is generally able to determine the signal to interference plus noise ratio (SINR) of different hypothesized serving ports better than the gNB, it may be desirable for the WD 22 to determine which of the N ports should correspond to the M desired ports. In one such embodiment, the WD 22 is configured with N ports using the bitmap $\{a_0, a_1, ... , a_{P-1}\}$ and the WD 22 later feeds back the bitmap $\{a'_0, a'_1, ... , a'_{N-1}\}$ to indicate to the gNB which layers should be used for the desired layers. In an alternative embodiment, the WD 22 indicates the M desired ports via a table containing all combinations of M out of N ports. In this alternative embodiment, the WD 22 feeds back an index to an entry in the table where each entry corresponds to one combination of M out of N ports. In other embodiments, the M desired ports are selected consecutively from N ports, where a starting index $0 \leq l < N$ indicates the first of the M antenna ports, and the M antenna ports may 'wrap around' in the list of N selected antenna ports. This may be expressed as further selecting the antenna ports $\tilde{p}_l, \tilde{p}_{(l+1)\%N}, ... , \tilde{p}_{(l+M-1)\%N}$ from the list of N antenna ports, where $x\%y$ denotes the remainder of x divided by y.

In some embodiments, this indication of M desired ports out of the N port subset of the CSI-RS resource is carried by a CSI-RS resource indicator ('CRI') field in CSI feedback.

Embodiment 1B: Independent bitmap based RRC configuration for port indication: In another embodiment implementing Step 1, the rank-nested property is not utilized and separate bitmaps are used to indicate the port subset selection for each rank hypothesis. For instance, a first bitmap $A_0 = a_0^{(0)} a_1^{(0)} ... a_{P-1}^{(0)}$ is used to indicate which port the WD 22 shall use for CQI calculation for rank-1 hypothesis (containing one non-zero bit) and a second bitmap $A_1 = a_0^{(1)} a_1^{(1)} ... a_{P-1}^{(1)}$ is used to indicate which two ports are used for CQI calculation for rank-2 hypothesis (containing two non-zero bits), and so forth. In this embodiment, multiple bitmaps, one for each rank, are signaled to the WD 22. This approach allows more flexibility in what precoding can be applied by the gNB. One motivation for introducing such a flexibility is that the precoders for different rank hypotheses may not be rank-nested, especially if some form of null-forming is applied. This is actually the case for minimum mean square error (MMSE), zero forcing (ZF) and minimum signal to linkage and interference ratio (SLNR) precoders. That is, the precoder for rank-1 transmission is not equal to the first column of the precoder for rank-2 transmission. Hence the corresponding CSI-RS ports cannot be shared between rank hypotheses.

Embodiment 2A: port index indication includes a starting port index in the CSI-RS resource and a number of ports. In this embodiment, the port index indication comprises

- A starting port index $p_s$, $s \in (0,1, ... , P - 1)$, and
- A number of ports, $N \in (1,2, ... , \min(8, P))$

The selected ports are $\{p_s, p_{s+1}, ... , p_{(s+N-1)mod(P)}\}$, i.e., N consecutive ports starting from $p_s$.

Note that N may not be explicitly indicated in the port index indication signaling, but may be implicitly derived by the WD 22 elsewhere, such as from a reported WD 22 capability and/or determined from another RRC parameter. Again, in this embodiment, rank-nested property is assumed by the network node and the WD such that port $\tilde{p}_0$ is assumed for rank-1 hypothesis, ports $\tilde{p}_0, \tilde{p}_1$ are assumed for rank-2 hypothesis, and so forth.

Embodiment 2B: Port index indication for non-rank nested precoding includes starting port index in the CSI-RS resource and a number of ports. By using independent bitmaps for each rank as was done in Embodiment 1A, full flexibility in supporting both rank-nest and non-rank-nested precoding is achieved, as well as a mix thereof. That is, some ports may be shared across rank hypotheses while others are not. In this embodiment, multiple port index indications, one for each rank, are signaled to the WD. If only completely non-overlapping port allocations across ranks needs to be supported, such flexibility may not be needed. Thus, in an embodiment, a starting port index $p_s$, $s \in (0,1, ..., P - 1)$ and a maximum rank R is indicated. According to a predefined rule, the port used for CQI calculation for rank-1 hypothesis is $p_s$, the ports used for rank-2 hypothesis is $p_s + 1$, $p_s + 2$, the ports used for rank-3 hypothesis is $p_s + 3$, $p_s + 4$, $p_s + 5$, and so forth, so that ports for the different rank hypotheses are allocated subsequently in a non-overlapping fashion.

Embodiment 3A: port index restriction within same CDM group(s): In NR, Code Division Multiplexing (CDM) is used to multiplex a group of CSI-RS ports. For example, ports {0,1,2,3} in a CSI-RS resource may be grouped together to share 4 resource elements (REs), i.e. each CSI-RS signal is transmitted in the same 4 REs, and different length-4 orthogonal codes (OCCs) are applied to CSI-RS signals from the 4 ports so that the signals from 4 ports can still be separated at the WD 22. The benefit is that due to CDM processing gain, better signal to noise ratio (SNR) for each of the CSI-RS signal can be achieved at the WD 22. In the example shown in FIG. 4, a CSI-RS resource for 16 ports with CDM 4 is illustrated. It can be seen that the ports in the CSI-RS resource are grouped into 4 groups. If ports in different CDM groups are selected, for example, ports {0, 4, 8, 12} are selected, then the WD 22 needs to process signals received on all 16 REs in order to obtain signals for the selected ports {0, 4, 8, 12}.

By restricting port selection such that the ports in the same CDM group(s) are selected, the WD 22 needs to process received signals only in the same CDM group. For example, if ports {0,1,2,3} are selected, the WD 22 needs only to process signals received on 4 REs of CD4 group 1 in FIG. 4. This can be done by restricting the value of s based on the value of $N$ in embodiment 2. For example, for $N = 2$, $s = 2k$, $k \in (0, 1, 2, \ldots, \frac{P}{2} - 1)$, i.e. $s$ is restricted to even numbers. For $N \in (3,4)$, $s = 4k$, $k \in (0, 1, 2, \ldots, \frac{P}{4} - 1)$ and for $N \in (5,6,7,8)$, $s = 8k$ ($k \in (0, 1, \ldots, \frac{P}{8} - 1)$). For embodiment 1, the seleted ports can be restricted to $\{a_s, a_{s+1}, \ldots, a_{s+N-1}\}$.

Embodiment 3B: port index restriction within same OFDM symbol: In another embodiment, port selection is restricted to be within the same OFDM symbol. By restricting the port selection to be within the same OFDM symbol, the WD 22 can process the signals from the N selected ports within one OFDM symbol and start CQI calculation right away. If the N selected ports are spread between multiple OFDM symbols, then the WD 22 has to wait until the multiple OFDM symbols are received before starting CQI calculation. Hence, this embodiment has the advantage that the WD 22 can calculate CQI faster compared to the case where the N selected ports are spread between multiple OFDM symbols. Note that one way of achieving this embodiment is by configuring P ports to be within one OFDM symbol which is possible when the CSI-RS resource contains P=2,4, 8, or 12 ports (see Table 1).

Embodiment 4A: precoder determination for selected ports: In this embodiment, let the selected N ports be denoted by $\{p_{s0}, p_{s1}, \ldots, p_{s(N-1)}\}$ where $s_0 < s_1 < \cdots < s_{N-1}$ and $s_i \in (0, 1, \ldots, P-1)$, $i \in (0, 1, \ldots, N-1)$. In this embodiment, for rank $k \in (1, 2, \ldots, N)$, the WD 22 should assume a precoding matrix of $W_k = \left[ e_0^{(N)}, e_1^{(N)}, \ldots, e_{k-1}^{(N)} \right]$ over the N ports for calculating CQI, where $e_m^{(N)}$ is a length-N column-vector with its $l$-th element set to 1 for $l = m$ ($l \in (0, 1, \ldots, N-1)$), and 0 otherwise. The $l$-th element of $e_m^{(N)}$ is associated with port $p_{sl}$. So with port index indication with a single bitmap as discussed in Embodiment 1A, for rank 1 transmission, port $p_{s0}$ is used and generally for rank k transmission, ports $\{p_{s0}, p_{s1}, \ldots, p_{sk-1}\}$ are used.

Embodiment 5: Port index indication for multiple CSI-RS resources: When more than one CSI-RS resources are configured for a WD 22 for non-PMI feedback purposes, a separate port index indication can be configured for each CSI-RS resource. The CSI-RS resource can be dynamically indicated to the WD 22. Thus, some methods described herein may be used to select any port combinations for a given CSI-RS resource, and some methods described herein allow for simpler WD 22 implementation.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination within the scope of the appended claims.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

**Claims**

1. A method for a network node (16), the method comprising:

   generating (S134) at least one port indication in one of a rank-nested and a non-rank-nested manner; and
   signalling (S136) the at least one port indication in the one of the rank-nested and the non-rank-nested manner,
   wherein in the rank-nested manner, the at least one port indication includes a list of port indices in which a first port index in the list indicates a port for a rank 1 channel state information, CSI, measurement, first two port indices in the list indicates ports for a rank 2 CSI measurement, one or more first k, k=1,2,...,8, port indices in the list indicates one or more ports for a rank k CSI measurement, and
   wherein in the non-rank-nested manner, the at least one port indication includes a plurality of port indications, each one of the plurality of port indications for each associated rank.

2. The method of Claim 1, wherein:

   - the at least one port indication includes at least one port index indication; and/or
   - the signalling the at least one port indication further comprises signalling the at least one port indication in a CSI report setting configuration; and/or
   - the at least one port indication indicates which ports in at least one CSI reference signal, CSI-RS, resource to use for measuring channel quality for a rank assumption for a non-precoder matrix indicator, non-PMI, CSI feedback, the non-PMI CSI feedback being a CSI feedback without a precoder matrix indicator.

3. The method of Claim 1 or 2, wherein the at least one port indication for rank k, k=1,2,...,8, includes k port indices for a rank k CSI measurement.

4. The method of any one of Claims 1 to 3, wherein:

   - the signalling the at least one port indication further comprises signalling the at least one port indication to the wireless device; and/or
   - the at least one port indication includes at least one port index indication, the at least one port index indication indicating port indices in at least one CSI reference signal, CSI-RS, resource; and/or
   - the method further comprises receiving, from the wireless device, a non-precoder matrix indicator, non-PMI, CSI feedback, the non-PMI CSI feedback including a rank indicator, RI, and at least one channel quality indicator, CQI.

5. A computer-readable medium (66, 88) comprising code portions which, when executed on a processor (64), configure the processor to perform the method according to any one of claims 1 to 4.

6. A network node (16) configured to communicate with a wireless device, WD (22), the network node (16) comprising:

   processing circuitry (62) configured to generate at least one port indication in one of a rank-nested and a non-rank-nested manner; and
a radio interface (58) configured to signal the at least one port indication in the one of the rank-nested and the non-rank-nested manner,
wherein in the rank-nested manner, the at least one port indication includes a list of port indices in which a first port index in the list indicates a port for a rank 1 channel state information, CSI, measurement, first two port indices in the list indicates ports for a rank 2 CSI measurement, one or more first $k$, $k=1,2,...,8$, port indices in the list indicates one or more ports for a rank $k$ CSI measurement, and
wherein in the non-rank-nested manner, the at least one port indication includes a plurality of port indications, each one of the plurality of port indications for each associated rank.

7. The network node (16) of claim 6, further configured to perform the method of any one of claims 2 to 4.

8. A method for a wireless device, WD (22), the method comprising:

receiving (S138) at least one port indication from a network node (16), the at least one port indication being received in one of a rank-nested and a non-rank-nested manner; and
generating (S140) channel state information, CSI, feedback based on the at least one port indication,
wherein in the rank-nested manner, the received at least one port indication includes a list of port indices in which a first port index in the list indicates a port for a rank 1 CSI measurement, first two port indices in the list indicates ports for a rank 2 CSI measurement, one or more first $k$, $k=1,2,...,8$, port indices in the list indicates one or more ports for a rank $k$ CSI measurement, and
wherein in the non-rank-nested manner, the received at least one port indication includes a plurality of port indications, each one of the plurality of port indications for each associated rank.

9. The method of Claim 8, wherein:

- the at least one port indication includes at least one port index indication; and/or
- the receiving the at least one port indication further comprises receiving the at least one port indication in a CSI report setting configuration; and/or
- the at least one port indication indicates which ports in at least one CSI reference signal, CSI-RS, resource to use for measuring channel quality for a rank assumption for a non-precoder matrix indicator, non-PMI, CSI feedback, the non-PMI CSI feedback being a CSI feedback without a precoder matrix indicator; and/or
- the at least one port indication for rank $k$, $k=1,2,...,8$, includes $k$ port indices for a rank $k$ CSI measurement; and/or
- the at least one port indication includes at least one port index indication, the at least one port index indication indicating port indices in at least one CSI reference signal, CSI-RS, resource; and/or
- the generating the CSI feedback comprises generating a non-precoder matrix indicator, non-PMI, CSI feedback, the non-PMI CSI feedback including a rank indicator, RI, and at least one channel quality indicator, CQI.

10. A computer-readable medium (92, 78) comprising code portions which, when executed on a processor (78), configure the processor to perform the method according to claim 8 or 9.

11. A wireless device, WD (22), configured to communicate with a network node (16), the WD (22) comprising:

a radio interface (72) configured to receive at least one port indication from a network node (16), the at least one port indication being received in one of a rank-nested and a non-rank-nested manner; and
processing circuitry (74) configured to generate channel state information, CSI, feedback based on the at least one port indication,
wherein in the rank-nested manner, the received at least one port indication includes a list of port indices in which a first port index in the list indicates a port for a rank 1 CSI measurement, first two port indices in the list indicates ports for a rank 2 CSI measurement, one or more first $k$, $k=1,2,...,8$, port indices in the list indicates one or more ports for a rank $k$ CSI measurement, and
wherein in the non-rank-nested manner, the received at least one port indication includes a plurality of port indications, each one of the plurality of port indications for each associated rank.

12. The WD (22) of claim 11, further configured to perform the method of claim 9.

**Patentansprüche**

1. Verfahren für einen Netzknoten (16), wobei das Verfahren Folgendes umfasst:

   Erzeugen (S134) mindestens einer Port-Angabe in einer von einer Weise mit Rangverschachtelung und einer Weise ohne Rangverschachtelung; und
   Signalisieren (S136) der mindestens einen Port-Angabe in der einen der Weise mit Rangverschachtelung und der Weise ohne Rangverschachtelung,
   wobei in der Weise mit Rangverschachtelung die mindestens eine Port-Angabe eine Liste von Port-Indizes beinhaltet, in der ein erster Port-Index in der Liste einen Port für eine Kanalzustandsinformationsmessung, CSI-Messung, von Rang 1 angibt, erste zwei Port-Indizes in der Liste Ports für eine CSI-Messung von Rang 2 angeben, ein oder mehrere erste k, k=1,2,...,8, Port-Indizes in der Liste einen oder mehrere Ports für eine CSI-Messung von Rang k angeben und
   wobei in der Weise ohne Rangverschachtelung die mindestens eine Port-Angabe eine Vielzahl von Port-Angaben, jede eine der Vielzahl von Port-Angaben für jeden zugeordneten Rang, beinhaltet.

2. Verfahren nach Anspruch 1, wobei:

   - die mindestens eine Port-Angabe mindestens eine Port-Indexangabe beinhaltet; und/oder
   - das Signalisieren der mindestens einen Port-Angabe ferner Signalisieren der mindestens einen Port-Angabe in einer CSI-Berichteinstellungskonfiguration umfasst; und/oder
   - die mindestens eine Port-Angabe angibt, welche Ports in mindestens einer CSI-Referenzsignalressource, CSI-RS-Ressource, zum Messen einer Kanalqualität für eine Rangannahme für eine CSI-Rückkopplung eines Non-Precodermatrixindikators, Non-PMI, zu verwenden sind, wobei die CSI-Rückkopplung des Non-PMI eine CSI-Rückkopplung ohne einen Precodermatrixindikator ist.

3. Verfahren nach Anspruch 1 oder 2, wobei die mindestens eine Port-Angabe für Rang k, k=1,2,...,8, k Port-Indizes für eine CSI-Messung von Rang k beinhaltet.

4. Verfahren nach einem der Ansprüche 1 bis 3, wobei:

   - das Signalisieren der mindestens einen Port-Angabe ferner Signalisieren der mindestens einen Port-Angabe an die drahtlose Einrichtung umfasst; und/oder
   - die mindestens eine Port-Angabe mindestens eine Port-Indexangabe beinhaltet, wobei die mindestens eine Port-Indexangabe Port-Indizes in mindestens einer CSI-Referenzsignalressource, CSI-RS-Ressource, angibt; und/oder
   - das Verfahren ferner Empfangen, von der drahtlosen Einrichtung, einer CSI-Rückkopplung eines Non-Precodermatrixindikators, Non-PMI, umfasst, wobei die CSI-Rückkopplung des Non-PMI einen Rangindikator, RI, und mindestens einen Kanalqualitätsindikator, CQI, beinhaltet.

5. Computerlesbares Medium (66, 88), umfassend Codeabschnitte, die, wenn sie auf einem Prozessor (64) ausgeführt werden, den Prozessor dazu konfigurieren, das Verfahren nach einem der Ansprüche 1 bis 4 durchzuführen.

6. Netzknoten (16), der dazu konfiguriert ist, mit einer drahtlosen Einrichtung, WD (22), zu kommunizieren, wobei der Netzknoten (16) Folgendes umfasst:

   einen Verarbeitungsschaltkreis (62), der dazu konfiguriert ist, mindestens eine Port-Angabe in einer von einer Weise mit Rangverschachtelung und einer Weise ohne Rangverschachtelung zu erzeugen; und
   eine Funkschnittstelle (58), die dazu konfiguriert ist, die mindestens eine Port-Angabe in der einen der Weise mit Rangverschachtelung und der Weise ohne Rangverschachtelung zu signalisieren,
   wobei in der Weise mit Rangverschachtelung die mindestens eine Port-Angabe eine Liste von Port-Indizes beinhaltet, in der ein erster Port-Index in der Liste einen Port für eine Kanalzustandsinformationsmessung, CSI-Messung, von Rang 1 angibt, erste zwei Port-Indizes in der Liste Ports für eine CSI-Messung von Rang 2 angeben, ein oder mehrere erste k, k=1,2,...,8, Port-Indizes in der Liste einen oder mehrere Ports für eine CSI-Messung von Rang k angeben und
   wobei in der Weise ohne Rangverschachtelung die mindestens eine Port-Angabe eine Vielzahl von Port-Angaben, jede eine der Vielzahl von Port-Angaben für jeden zugeordneten Rang, beinhaltet.

7. Netzknoten (16) nach Anspruch 6, der ferner dazu konfiguriert ist, das Verfahren nach einem der Ansprüche 2 bis 4 durchzuführen.

8. Verfahren für eine drahtlose Einrichtung, WD (22), wobei das Verfahren Folgendes umfasst:

Empfangen (S138) mindestens einer Port-Angabe von einem Netzknoten (16), wobei die mindestens eine Port-Angabe in einer von einer Weise mit Rangverschachtelung und einer Weise ohne Rangverschachtelung empfangen wird; und
Erzeugen (S140) einer Kanalzustandsinformationsrückkopplung, CSI-Rückkopplung, basierend auf der mindestens einen Port-Angabe,
wobei in der Weise mit Rangverschachtelung die empfangene mindestens eine Port-Angabe eine Liste von Port-Indizes beinhaltet, in der ein erster Port-Index in der Liste einen Port für eine CSI-Messung von Rang 1 angibt, erste zwei Port-Indizes in der Liste Ports für eine CSI-Messung von Rang 2 angeben, ein oder mehrere erste k, k=1,2,...,8, Port-Indizes in der Liste einen oder mehrere Ports für eine CSI-Messung von Rang k angeben und wobei in der Weise ohne Rangverschachtelung die empfangene mindestens eine Port-Angabe eine Vielzahl von Port-Angaben, jede eine der Vielzahl von Port-Angaben für jeden zugeordneten Rang, beinhaltet.

9. Verfahren nach Anspruch 8, wobei:

- die mindestens eine Port-Angabe mindestens eine Port-Indexangabe beinhaltet; und/oder
- das Empfangen der mindestens einen Port-Angabe ferner Empfangen der mindestens einen Port-Angabe in einer CSI-Berichteinstellungskonfiguration umfasst; und/oder
- die mindestens eine Port-Angabe angibt, welche Ports in mindestens einer CSI-Referenzsignalressource, CSI-RS-Ressource, zum Messen einer Kanalqualität für eine Rangannahme für eine CSI-Rückkopplung eines Non-Precodermatrixindikators, Non-PMI, zu verwenden sind, wobei die CSI-Rückkopplung des Non-PMI eine CSI-Rückkopplung ohne einen Precodermatrixindikator ist; und/oder
- die mindestens eine Port-Angabe für Rang k, k=1,2,...,8, k Port-Indizes für eine CSI-Messung von Rang k beinhaltet; und/oder
- die mindestens eine Port-Angabe mindestens eine Port-Indexangabe beinhaltet, wobei die mindestens eine Port-Indexangabe Port-Indizes in mindestens einer CSI-Referenzsignalressource, CSI-RS-Ressource, angibt; und/oder
- das Erzeugen der CSI-Rückkopplung Erzeugen einer CSI-Rückkopplung eines Non-Precodermatrixindikators, Non-PMI, umfasst, wobei die CSI-Rückkopplung des Non-PMI einen Rangindikator, RI, und mindestens einen Kanalqualitätsindikator, CQI, beinhaltet.

10. Computerlesbares Medium (92, 78), umfassend Codeabschnitte, die, wenn sie auf einem Prozessor (78) ausgeführt werden, den Prozessor dazu konfigurieren, das Verfahren nach Anspruch 8 oder 9 durchzuführen.

11. Drahtlose Einrichtung, WD (22), die dazu konfiguriert ist, mit einem Netzknoten (16) zu kommunizieren, wobei die WD (22) Folgendes umfasst:

eine Funkschnittstelle (72), die dazu konfiguriert ist, die mindestens eine Port-Angabe von einem Netzknoten (16) zu empfangen, wobei die mindestens eine Port-Angabe in einer von einer Weise mit Rangverschachtelung und einer Weise ohne Rangverschachtelung empfangen wird; und
einen Verarbeitungsschaltkreis (74), der dazu konfiguriert ist, eine Kanalzustandsinformationsrückkopplung, CSI-Rückkopplung, basierend auf der mindestens einen Port-Angabe zu erzeugen,
wobei in der Weise mit Rangverschachtelung die empfangene mindestens eine Port-Angabe eine Liste von Port-Indizes beinhaltet, in der ein erster Port-Index in der Liste einen Port für eine CSI-Messung von Rang 1 angibt, erste zwei Port-Indizes in der Liste Ports für eine CSI-Messung von Rang 2 angeben, ein oder mehrere erste k, k=1,2,...,8, Port-Indizes in der Liste einen oder mehrere Ports für eine CSI-Messung von Rang k angeben und wobei in der Weise ohne Rangverschachtelung die empfangene mindestens eine Port-Angabe eine Vielzahl von Port-Angaben, jede eine der Vielzahl von Port-Angaben für jeden zugeordneten Rang, beinhaltet.

12. WD (22) nach Anspruch 11, die ferner dazu konfiguriert ist, das Verfahren nach Anspruch 9 durchzuführen.

**Revendications**

1. Procédé pour un nœud de réseau (16), le procédé comprenant :

   la génération (S134) d'au moins une indication de port dans l'une d'une manière imbriquée ou non imbriquée en rang ; et
   la signalisation (S136) de l'au moins une indication de port dans l'une d'une manière imbriquée ou non imbriquée en rang,
   dans lequel, dans la manière imbriquée en rang, l'au moins une indication de port comprend une liste d'indices de port dans laquelle un premier indice de port dans la liste indique un port pour une mesure d'informations d'état de canal, CSI, de rang 1, les deux premiers indices de port dans la liste indiquent des ports pour une mesure CSI de rang 2, un ou plusieurs premiers indices de port k, k=1,2,...,8, dans la liste indiquent un ou plusieurs ports pour une mesure CSI de rang k, et
   dans lequel, dans la manière non imbriquée en rang, l'au moins une indication de port comprend une pluralité d'indications de port, chacune de la pluralité d'indications de port pour chaque rang associé.

2. Procédé selon la revendication 1, dans lequel :

   - l'au moins une indication de port comprend au moins une indication d'indice de port ; et/ou
   - la signalisation de l'au moins une indication de port comprend en outre la signalisation de l'au moins une indication de port dans une configuration de paramètre de rapport CSI ; et/ou
   - l'au moins une indication de port indique quels ports dans au moins une ressource de signal de référence CSI, CSI-RS, utiliser pour mesurer la qualité du canal pour une hypothèse de rang pour un retour CSI d'indicateur de matrice non de précodage, non-PMI, le retour CSI non-PMI étant un retour CSI sans indicateur de matrice de précodage.

3. Procédé selon la revendication 1 ou 2, dans lequel l'au moins une indication de port pour le rang k, k=1, 2,..., 8, comprend k indices de port pour une mesure CSI de rang k.

4. Procédé selon l'une quelconque des revendications 1 à 3, dans lequel :

   - la signalisation de l'au moins une indication de port comprend en outre la signalisation de l'au moins une indication de port au dispositif sans fil ; et/ou
   - l'au moins une indication de port comprend au moins une indication d'indice de port, l'au moins une indication d'indice de port indiquant des indices de port dans au moins une ressource de signal de référence CSI, CSI-RS ; et/ou
   - le procédé comprend en outre la réception, en provenance du dispositif sans fil, d'un retour CSI d'indicateur de matrice non de précodage, non-PMI, le retour CSI non-PMI comprenant un indicateur de rang, RI, et au moins un indicateur de qualité de canal, CQI.

5. Support lisible par ordinateur (66, 88) comprenant des parties de code qui, lorsqu'elles sont exécutées sur un processeur (64), configurent le processeur pour mettre en œuvre le procédé selon l'une quelconque des revendications 1 à 4.

6. Nœud de réseau (16) configuré pour communiquer avec un dispositif sans fil, WD (22), le nœud de réseau (16) comprenant :

   un circuit de traitement (62) configuré pour générer au moins une indication de port dans l'une d'une manière imbriquée ou non imbriquée en rang ; et
   une interface radio (58) configurée pour signaler l'au moins une indication de port dans l'une d'une manière imbriquée ou non imbriquée en rang,
   dans lequel, dans la manière imbriquée en rang, l'au moins une indication de port comprend une liste d'indices de port dans laquelle un premier indice de port dans la liste indique un port pour une mesure d'informations d'état de canal, CSI, de rang 1, les deux premiers indices de port dans la liste indiquent des ports pour une mesure CSI de rang 2, un ou plusieurs premiers indices de port k, k=1, 2,...,8, dans la liste indiquent un ou plusieurs ports pour une mesure CSI de rang k, et
   dans lequel, dans la manière non imbriquée en rang, l'au moins une indication de port comprend une pluralité d'indications de port, chacune de la pluralité d'indications de port pour chaque rang associé.

7. Nœud de réseau (16) selon la revendication 6, configuré en outre pour mettre en œuvre le procédé selon l'une quelconque des revendications 2 à 4.

8. Procédé pour un dispositif sans fil, WD (22), le procédé comprenant :

la réception (S138) d'au moins une indication de port provenant d'un nœud de réseau (16), ladite au moins une indication de port étant reçue dans l'une d'une manière imbriquée ou non imbriquée en rang ; et
la génération (S140) de retour d'informations d'état de canal, CSI, sur la base de l'au moins une indication de port, dans lequel, dans la manière imbriquée en rang, l'au moins une indication de port reçue comprend une liste d'indices de port dans laquelle un premier indice de port dans la liste indique un port pour une mesure CSI de rang 1, les deux premiers indices de port dans la liste indiquent des ports pour une mesure CSI de rang 2, un ou plusieurs premiers indices de port k, k=1,2, ...,8, dans la liste indiquent un ou plusieurs ports pour une mesure CSI de rang k, et
dans lequel, dans la manière non imbriquée en rang, l'au moins une indication de port reçue comprend une pluralité d'indications de port, chacune de la pluralité d'indications de port pour chaque rang associé.

9. Procédé selon la revendication 8, dans lequel :

- l'au moins une indication de port comprend au moins une indication d'indice de port ; et/ou
- la réception de l'au moins une indication de port comprend en outre la réception de l'au moins une indication de port dans une configuration de paramètre de rapport CSI ; et/ou
- l'au moins une indication de port indique quels ports dans au moins une ressource de signal de référence CSI, CSI-RS, utiliser pour mesurer la qualité du canal pour une hypothèse de rang pour un retour CSI d'indicateur de matrice non de précodage, non-PMI, le retour CSI non-PMI étant un retour CSI sans indicateur de matrice de précodage ; et/ou
- l'au moins une indication de port pour le rang k, k=1,2,...,8, comprend k indices de port pour une mesure CSI de rang k ; et/ou
- l'au moins une indication de port comprend au moins une indication d'indice de port, l'au moins une indication d'indice de port indiquant des indices de port dans au moins une ressource de signal de référence CSI, CSI-RS ; et/ou
- la génération du retour CSI comprend la génération d'un retour CSI d'indicateur de matrice non de précodage, non-PMI, le retour CSI non-PMI comprenant un indicateur de rang, RI, et au moins un indicateur de qualité de canal, CQI.

10. Support lisible par ordinateur (92, 78) comprenant des parties de code qui, lorsqu'elles sont exécutées sur un processeur (78), configurent le processeur pour mettre en œuvre le procédé selon la revendication 8 ou 9.

11. Dispositif sans fil, WD (22), configuré pour communiquer avec un nœud de réseau (16), le WD (22) comprenant :

une interface radio (72) configurée pour recevoir au moins une indication de port d'un nœud de réseau (16), l'au moins une indication de port étant reçue selon l'une d'une manière imbriquée ou non imbriquée en rang ; et
un circuit de traitement (74) configuré pour générer un retour d'informations d'état de canal, CSI, sur la base de l'au moins une indication de port,
dans lequel, dans la manière imbriquée par rang, l'au moins une indication de port reçue comprend une liste d'indices de port dans laquelle un premier indice de port dans la liste indique un port pour une mesure CSI de rang 1, les deux premiers indices de port dans la liste indiquent des ports pour une mesure CSI de rang 2, un ou plusieurs premiers indices de port k, k=1,2,...,8, dans la liste indiquent un ou plusieurs ports pour une mesure CSI de rang k, et
dans lequel, dans la manière non imbriquée en rang, l'au moins une indication de port reçue comprend une pluralité d'indications de port, chacune de la pluralité d'indications de port pour chaque rang associé.

12. WD (22) selon la revendication 11, configuré en outre pour mettre en œuvre le procédé selon la revendication 9.

EP 3 711 207 B1

FIG. 1

FIG. 2

26

OFDM symbol #:

CDM2 group 1, ports (0,1)

CDM2 group 2, ports (2,3)

CDM2 group 3, ports (4,5)

CDM2 group 4 (ports (6,7)

FIG. 3

OFDM symbol #:

CDM4 group 1, ports (0,1,2,3)

CDM4 group 2, ports (4,5,6,7)

CDM4 group 3, ports (8,9,10,11)

CDM4 group 4 (ports (12,13,14,15)

FIG. 4

FIG. 5

FIG . 6

*24* **Host computer**

*48* SW

*50* Host application

*38* HW

*40* Communication interface

Processing circuitry *42*

Memory *46*

Processor *44*

*61*

*10*

**Network Node**

*16*

*68* SW

*54* HW → Communication interface *56*

Radio interface *58*

Processing circuitry *62*

Memory *66*

Processor *64*

Port Indication Generator *32*

*22* **WD**

*80* SW

*82* Client application

*70* HW

Radio interface *72*

Processing circuitry *74*

Memory *78*

Processor *76*

CSI-RS Feedback Generator *34*

*52*

*60*

**FIG. 7**

Network Node 16

Radio Interface Module 86

Communication Interface Module 87

Memory Module 88

Port Indication Generation Module 89

FIG. 9

Wireless Device 22

Radio Interface Module 91

Memory Module 92

CSI-RS Feedback Generator Module 93

FIG. 10

Host Computer 24

Communication Interface Module 83

Memory Module 84

FIG. 8

BEGIN

**S100**
Host computer
provides user
data

**S102**
Host computer
executes host
application

**S104**
Host computer
initiates
transmission
carrying the
user data to
the WD

**S106**
Network Node
transmits the
user data

**S108**
WD executes
client
application

END

**FIG. 11**

BEGIN

**S110**
Host computer
provides user
data

**S112**
Host computer
initiates
transmission
carrying the
user data to
the WD

**S114**
WD receives
the user data

END

**FIG. 12**

BEGIN

S116
WD receives
input data
provided at
host computer

S118
WD executes
client
application

S120
WD provides
user data

S122
WD executes
client
application

S124
WD initiates
transmission
of the user
data to the
host computer

S126
Host computer
receives user
data
transmitted
from the WD

END

FIG. 13

BEGIN

S128
Network Node
receives user
data from WD

S130
Network Node
initiates
transmission
of user data to
the host
computer

S132
Host computer
receives the
user data

END

FIG. 14

BEGIN

Generate at least one port indication in one of a rank nested and a non-rank nested manner
S134

Signal the at least one port indication in the one of the rank nested and the non-rank nested manner
S136

END

FIG. 15

BEGIN

Receive at least one port indication from a network node the at
least one port indication being received in one of a rank nested
and a non-rank nested manner
S138

Generate channel state information reference signal, CSI-RS,
feedback based at least in part on at least one port indicated
by the at least one port indication
S140

END

FIG. 16

BEGIN

Receive signalling indicating at least one desired port for channel state information reference signal, CSI-RS feedback, the at least one desired port associated with a rank
S142

Generate at least one port indication based at least in part on the received signaling
S144

END

FIG. 17

BEGIN

Determine a signal-to-interference-plus-noise ratio, SINR, of at least
one hypothesized serving port
S146

Signal an indication of at least one desired port for channel state
information reference signal, CSI-RS feedback based at least in part
on the determined SINR, the at least one desired port associated with
a rank calculation
S148

END

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OPPO**. Discussion on CSI Measurement. *3GPP document, R1-1718053*
- **QUALCOMM EUROPE**. Transparent vs. non-transparent MU-MIMO operation. *3GPP draft, R1-094873*
- **ERICSSON**. On CSI measurement. *3GPP draft, R1-1718431*